# EUROPEAN PATENT APPLICATION

(11) **EP 2 405 358 A1**
(43) Date of publication of application: **11.01.2012**
(21) Application number: 09841098.8
(22) Date of filing: 05.03.2009
(51) Int. Cl.: G06F 12/00

(54) **INTEGRAL DOUBLE EXCLUSION SYSTEM, DATA STORAGE DEVICE, AND SERVER DEVICE**

(71) Applicant: Hitachi Solutions, Ltd., Tokyo 140-0002 (JP)
(72) Inventor: ISHII, Yohsuke, Kawasaki-shi Kanagawa 215-0013 (JP); NAKAMURA, Takaki, Kawasaki-shi Kanagawa 215-0013 (JP); NAKAGOE, Hiroshi, Kawasaki-shi Kanagawa 215-0013 (JP)
(74) Representative: Liesegang, Eva
(86) International application number: PCT/JP2009/054126
(87) International publication number: WO 2010/100733

(57) **Abstract**

First, a duplicate elimination process based on a first duplicate elimination process, in which both a duplicate elimination effect and a processing load are low, is executed. Information related to a processing result of the duplicate elimination process based on the first duplicate elimination process is acquired prior to execution of a second duplicate elimination process, in which both the duplicate elimination effect and the processing load are high. Target data of the second duplicate elimination process is narrowed down based on the acquired information. The second duplicate elimination process is applied only to the narrowed down target data. As a result, an integrated duplicate elimination system with a lower processing load than in a conventional system is realized while attaining a high duplicate elimination effect.

## Description

### Technical Field

The present invention relates to a control technique among the control techniques of a storage system for storing a large amount of data, the technique allowing effective utilization of a storage capacity by eliminating duplication of redundantly stored data.

### Background Art

In recent years, the usage of a computer system is expanded in various types of business and applications as a result of higher performance and lower cost of the computer system. Along with this, data conventionally handled by print media as well as data in multimedia formats, such as music and video, are computerized and electronically stored in the computer system. The usage in a form of connecting a plurality of computer systems via a network is rapidly advancing. This can realize remote backup, distributed management, or distributed processing of data, and the availability, reliability, and high performance that are difficult to realize just by storing the data in one computer system can be realized.

In recent years, services using the Internet are widely used as a result of a wider bandwidth of a communication network as well as fixation and lower cost of the network connection fees. At first, browsing of Web pages as well as transmission and reception of emails were main services. However, services of exchanging large-volume data, such as backup services of data and data sharing services via the Internet, are also used recently. To back up or share data, conventional users had to individually prepare backup devices and shared servers, and the users had to manage the devices themselves. However, when the backup services and data sharing services via the Internet are used, the users can back up or share the data just by accessing the services accessible via the Internet. There is also an advantage that each user just has to prepare an environment of connection to the Internet and does not have to prepare or manage the backup devices and the shared servers. Therefore, wider utilization of services in such a form can be expected in the future.

Conventionally, when data of a plurality of users are aggregated in a storage system of a data center, there is a case in which the storage system stores exactly the same data that is transmitted redundantly. For example, a large number of users can have a same music file, such as a music file purchased from an Internet shop or the like. Therefore, it is fully possible that the same data is redundantly stored in the storage system. Consequently, a technique for eliminating duplication of data with the same content is disclosed to improve the use efficiency of storage in a storage system (Patent Document 1). The system realizes the duplicate elimination by detecting the duplication of the stored data in the storage system block by block and deleting the redundant duplicate data.
Patent Document 1: U.S. Patent No. 7,143,251

### Disclosure of the Invention

### Problems to be Solved by the Invention

However, in the system, data related to the same content cannot be eliminated as duplicated data if the quality, such as format and bit rate, is different, and there is a problem that the duplicate elimination effect is low. Consequently, a system (hereinafter, called "second system") of detecting the duplication of data content-by-content to delete the redundant duplicate data can be adopted.

The second system can realize higher duplicate elimination effect than in the technique described in Patent Document 1. On the other hand, there is a problem that the processing load for detecting the duplication content-by-content is large. Specifically, the processing load of CPU processing and the like for analyzing the content and detecting the duplication is greater than the processing load for analyzing the content block-by-block in a bit string level to detect the duplication.

The problem is caused by elimination of the duplication by applying a content-by-content duplicate elimination process with high processing load to data of which the duplication can be essentially eliminated by a block-by-block duplicate elimination process with low processing load. In that case, the block-by-block duplicate elimination process can be applied in advance to the duplicate elimination target data at a stage before the execution of the content-by-content duplicate elimination process, and then the content-by-content duplicate elimination process can be applied only to the data of which the duplication could not be eliminated in the block-by-block process. However, in the conventional system, it is difficult to recognize information indicating what kind of duplicate elimination process is applied to which data.

### Means for Solving the Problems

The inventors propose an integrated duplicate elimination system including: a first duplicate elimination unit that applies a duplicate elimination process to data of a data storage device, wherein both a duplicate elimination effect and a processing load are low; and a second duplicate elimination unit that executes a duplicate elimination process after the duplicate elimination process by the first duplicate elimination unit, wherein both the duplicate elimination effect and the processing load are high, the second duplicate elimination unit acquiring a processing result of the first duplicate elimination unit prior to the duplicate elimination process applied to the data of the data storage device and applying the duplicate elimination process to at least data other than the data of which the duplication is already eliminated from the data storage device.

The first duplicate elimination unit eliminates the duplication by comparing digest information for uniquely identifying the content of data at a processing level (for example, a file level or a block level). The second duplicate elimination unit extracts feature information for uniquely identifying the content based on data at a processing level (for example, a content level) and eliminates the duplication based on comparison of the information.

The present invention is not limited to the system configuration described above, and the present invention may be configured as a control device or a control method. The present invention can be realized by a computer program for realizing the system, a recording medium recording the program, a broadcast signal or a communication signal including the program, or in various other forms.

When the present invention is configured as a computer program, a recording medium recording the program, or the like, the present invention may be configured as a whole program for controlling the system, or only the part realizing the present invention may be included. Examples of the recording medium include a flexible disk, a CD-ROM, a DVD-ROM, a printed matter, such as a punch card and a bar code, on which symbols are printed, and various computer-readable volatile storage media and nonvolatile storage media, such as an internal storage device of the computer and an external storage device.

### Advantage of the Invention

As a result of the implementation of the integrated duplicate elimination system, the range of data to be processed can be made narrower than in the conventional system before the start of the execution process of the duplicate elimination process of the second duplicate elimination process with high processing load. More specifically, part of the duplicate elimination process with high processing load can be replaced by a duplicate elimination process with low processing load. This can realize a high duplicate elimination effect and reduce the processing load in a system necessary for the realization.

### Brief Description of the Drawings

Figure 1 is a diagram showing an example of a system configuration.
Figure 2 is a diagram showing an example of hardware configuration of a content server.
Figure 3 is a diagram showing an example of hardware configuration of a file server.
Figure 4 is a diagram showing an example of hardware configuration of a storage.
Figure 5 is a diagram showing an example of hardware configuration of a client machine.
Figure 6 is an explanatory view illustrating a processing image of integrated duplicate elimination with a combination of a duplicate elimination process at a content level and a duplicate elimination process at a file level.
Figure 7 is an explanatory view illustrating a content management table.
Figure 8 is a diagram illustrating a file management table.
Figure 9 is an explanatory view illustrating a data block management table.
Figure 10 is a flow chart showing an example of a content registration process.
Figure 11 is a flow chart showing an example of a file registration process.
Figure 12 is a flow chart showing an example of a data block registration process.
Figure 13 is a flow chart showing an example of an integrated duplicate elimination process.
Figure 14 is a flow chart showing an example of a content acquisition process.
Figure 15 is a flow chart showing an example of a content deletion process.
Figure 16 is a flow chart showing an example of a file deletion process.
Figure 17 is a flow chart showing an example of a data block deletion process.
Figure 18 is a diagram showing an example of an integrated duplicate elimination management screen.
Figure 19 is a flow chart explaining a file registration process (second embodiment).
Figure 20 is a flow chart explaining a file-level duplicate elimination process (second embodiment).
Figure 21 is a diagram illustrating a processing image of integrated duplicate elimination with a combination of a duplicate elimination process at the content level and a duplicate elimination process at a block level (third embodiment).
Figure 22 is a diagram showing an example of hardware configuration of the content server (third embodiment).
Figure 23 is a diagram showing an example of hardware configuration of the storage (third embodiment).
Figure 24 is a diagram illustrating the data block management table (third embodiment).
Figure 25 is a flow chart showing an example of the data block registration process (third embodiment).
Figure 26 is a flow chart explaining an example of the integrated duplicate elimination process (third embodiment).
Figure 27 is a flow chart explaining an example of the data block deletion process (third embodiment).
Figure 28 is a diagram showing an example of the integrated duplicate elimination management screen (third embodiment).
Figure 29 is a diagram illustrating the data block management table (fourth embodiment).
Figure 30 is a diagram illustrating a data block storage address management table (fourth embodiment).
Figure 31 is a flow chart showing an example of a block-level duplicate elimination process (fourth embodiment).

### Description of Symbols

10... Internet
100, 200 ... data centers
110,120,210,220 ... networks
1100,1200,1300,1400 ... content servers
2100,2200,2300,2400 ... file servers
3100,3200, 3300, 3400 ... storages
4100,4200,4300 ... client machines
1110,2110,3110,4110 ... processors
1120,2120,3120,4120 ... memories
1121, 2121, 3121, 4121 ... external storage device I/F control programs
1122,2122,3122,4122 ... network I/F control programs
1123 ... content management control program
1124 ... file server access client program
1125 ... content-level duplicate elimination control program
1126 ... integrated duplicate elimination control program
1127 ... file management table access client program
1128 ... data block management table access client program
2123 ... file management control program
2124 ... storage access client program
2125 ... file-level duplicate elimination control program
3123 ... block storage management control program
4123 ... local file system management control program
4124 ... content server access client program
1130, 2130, 3130, 4130 ... external storage device I/Fs
1140, 2140, 3140, 4140 ... network I/Fs
1150, 2150, 3150, 4150 ... buses
1160,2160,3160,4160 ... external storage devices
5100 ... content management table
5110 ... content ID
5120 ... content name
5130 ... content metadata
5140 ... content duplication flag
5150 ... reference content ID
5160 ... storage file ID
5170 ... the number of times of content reference
5180... content collation information
5200 ... file management table
5210 ... file ID
5220 ... file name
5230 ... file metadata
5240 ... fi1e duplication flag
5250 ... reference file ID
5260 ... storage block ID
5270 ... the number of times of file reference
5280 ... file collation information
5300 ... data block management table
5310 ... block ID
5320 ... block storage address
5330 ... block metadata
5340,5430 ... the numbers of times of block reference
5350, 5440 ... block collation information
5400 ... data block storage address management table
5410 ... block storage address
5420 ... block duplication flag
6100, 6200, 6300, 6400, 6500 ... contents
6110, 6210, 6310, 6410, 6510 ... files
7000 ... integrated duplicate elimination management screen
7100 ... content-level duplicate elimination enabling check box
7200 ... file-level duplicate elimination enabling check box
7300 ... OK button
7400... cancel button
7500... block-level duplicate elimination enabling check box
7600 ... content-level duplicate elimination execution threshold

### Best Mode for Carrying Out the Invention

### [First Embodiment]

The present embodiment describes an integrated duplicate elimination process with a combination of a duplicate elimination process at a file level by a file server and a duplicate elimination process at a content level by a content server.

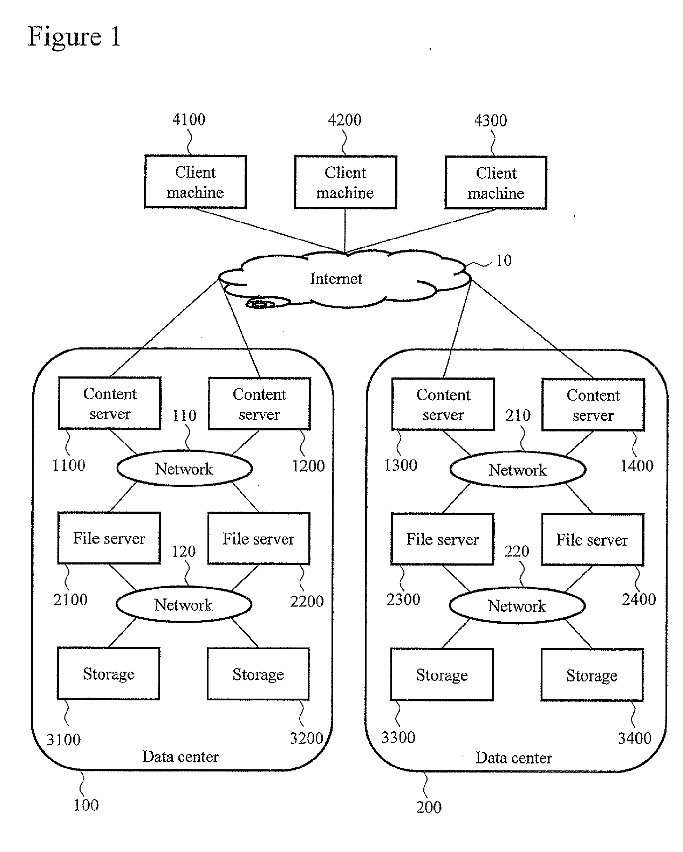

Figure 1 is an explanatory view illustrating a system configuration according to the embodiments of the present invention. A plurality of client machines 4100, 4200, and 4300 and a plurality of data centers 100 and 200 are connected via the Internet 10. In the present system, one or more data centers are used to provide a data storage service to a client machine, the service including one or more content servers, one or more file servers, and one or more storages. Each data center is configured in the same ways as in the configuration described below. In the data center 100, a plurality of content servers 1100 and 1200 are connected to the Internet 10. The content servers 1100 and 1200 are connected to a plurality of file servers 2100 and 2200 via an internal network 110. File servers 2100 and 2200 are connected to a plurality of storages 3100 and 3200 via an internal network 120.

Although three types of constituent elements, i.e. the content servers, the file servers, and the storages, are described as different apparatuses in Figure 1, the arrangement is not limited to this. If possible, two of the three types or all three types may be realized by one apparatus. The form of connection via the Internet 10 may be any network form. For example, the connection may be an intranet connection or may be a network connection via a local area network.

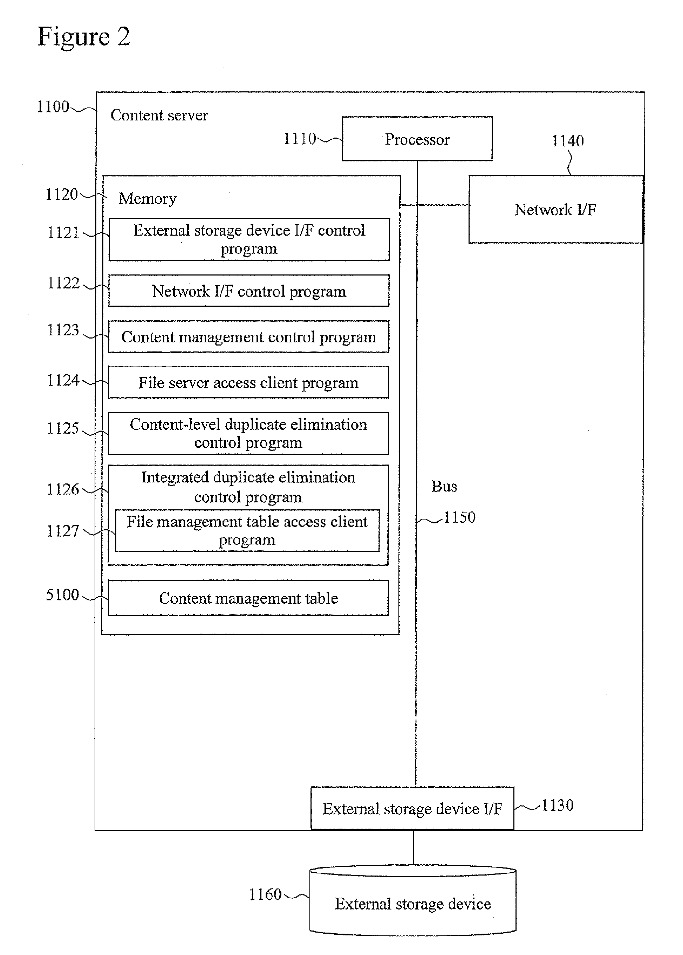

Figure 2 is an explanatory view illustrating a hardware configuration of the content server 1100. The content server 1100 includes a processor 1110 that executes programs, a memory 1120 that temporarily stores programs and data, an external storage device I/F 1130 for accessing an external storage device 1160, a network I/F 1140 for accessing other apparatuses connected via a network, and a bus 1150 that connects the components. The memory 1120 stores an external storage device I/F control program 1121 as a program for controlling the external storage device I/F 1130, a network I/F control program 1122 as a program for controlling the network I/F 1140, a content management control program 1123 for managing content data handled by the content server 1100, a file server access client program 1124 as a program for providing a function of issuing a file access request to the file servers 2100 and 2200 in the content server 1100, a content-level duplicate elimination control program 1125 as a program for providing a duplicate elimination function at a content level in the content server 1100, an integrated duplicate elimination control program 1126 as a program for providing a function of integrated execution of duplicate elimination functions at a plurality of levels, and a content management table 5100 used by the content management control program 1123.

A file management table access client program 1127 is included inside the integrated duplicate elimination control program 1126. Before the duplicate elimination at the content level in the content server 1100, the file management table access client program 1127 executes a process of checking whether a file server, which will be separately described later, has applied a duplicate elimination process at the file level, which will be separately described later, to a file corresponding to the target content. The content management table 5100 will be described later. The configurations of the other content servers are the same as the configuration described here, and the description will not be repeated.

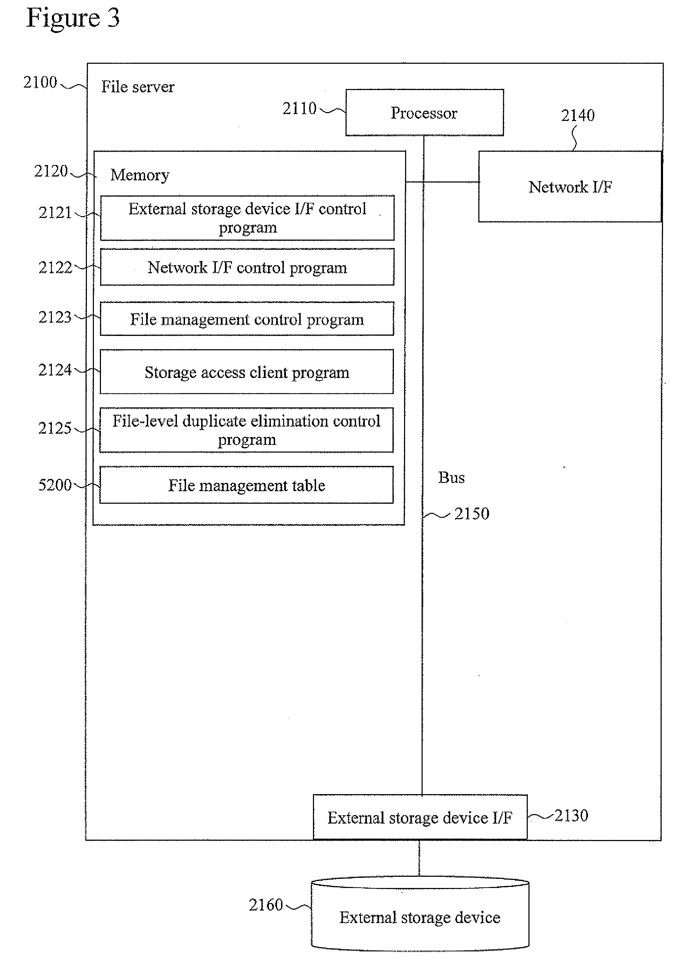

Figure 3 is an explanatory view illustrating a hardware configuration of the file server 2100. The file server 2100 includes a processor 2110 that executes programs, a memory 2120 that temporarily stores programs and data, an external storage device I/F 2130 for accessing an external storage device 2160, a network I/F 2140 for accessing other apparatuses connected via a network, and a bus 2150 that connects the components. The memory 2120 stores an external storage device I/F control program 2121 as a program for controlling the external storage device I/F 2130, a network I/F control program 2122 as a program for controlling the network I/F 2140, a file management control program 2123 for managing file data handled in the file server 2100, a storage access client program 2124 as a program for providing a function of issuing a data block access request to the storages 3100 and 3200 in the file server 2100, a file-level duplicate elimination control program 2125 as a program for providing a duplicate elimination function at the file level in the file server 2100, and a file management table 5200 used by the file management control program 2123. Configurations of the other file servers are the same as the configuration described here, and the description will not be repeated.

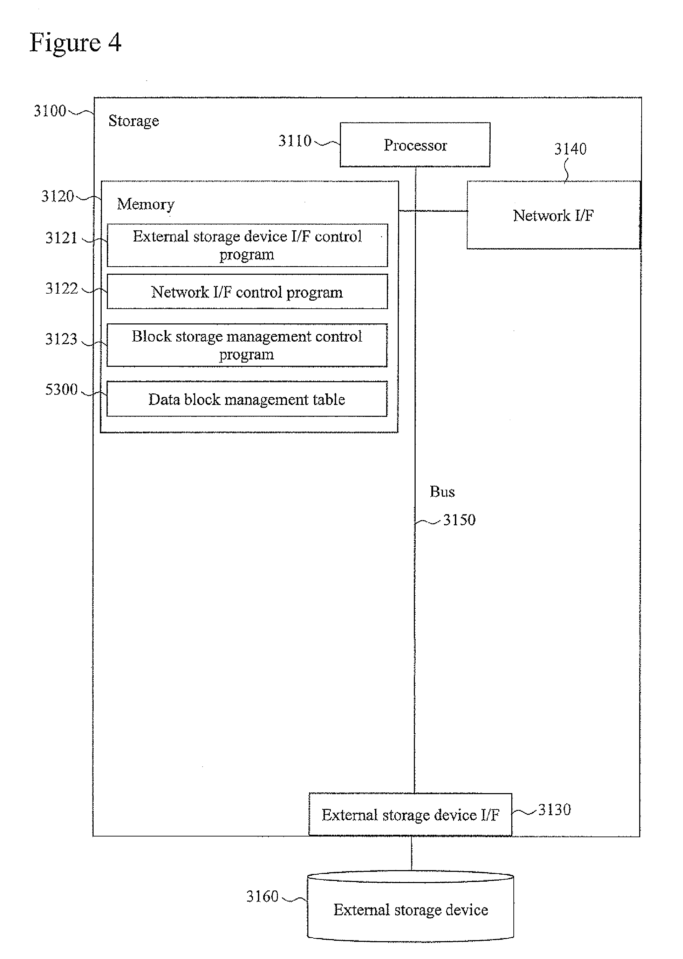

Figure 4 is an explanatory view illustrating a hardware configuration of the storage 3100. The storage 3100 includes a processor 3110 that executes programs, a memory 3120 that temporarily stores programs and data, an external storage device I/F 3130 for accessing an external storage device 3160, a network I/F 3140 for accessing other apparatuses connected via a network, and a bus 3150 that connects the components. The memory 3120 stores an external storage device I/F control program 3121 as a program for controlling the external storage device I/F 3130, a network I/F control program 3122 as a program for controlling the network I/F 3140, a block storage management control program 3123 for managing data blocks handled in the storage 3100, and a data block management table 5300 used by the block storage management control program 3123. Configurations of the other storages are the same as the configuration described here, and the description will not be repeated.

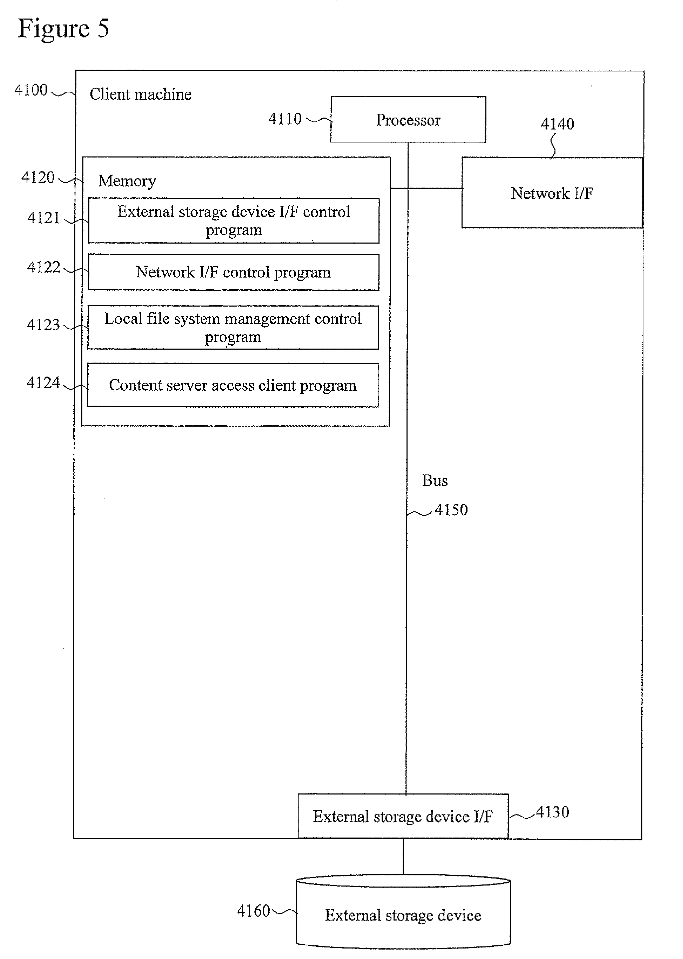

Figure 5 is an explanatory view illustrating a hardware configuration of the client machine 4100. The client machine 4100 includes a processor 4110 that executes programs, a memory 4120 that temporarily stores programs and data, an external storage device I/F 4130 for accessing an external storage device 4160, a network I/F 4140 for accessing other apparatuses connected via a network, and a bus 4150 that connects the components. The memory 4120 stores an external storage device I/F control program 4121 as a program for controlling the external storage device I/F 4130, a network 1/F control program 4122 as a program for controlling the network I/F 4140, a local file system control program 4123 as a program for controlling a file system for managing data in the client machine 4100, and a content server access client program 4124 as a program for providing a function of issuing a content access request to the content servers 1100 and 1200 in the client machine 4100. Configurations of the other client machines are the same as the configuration described here, and the description will not be repeated.

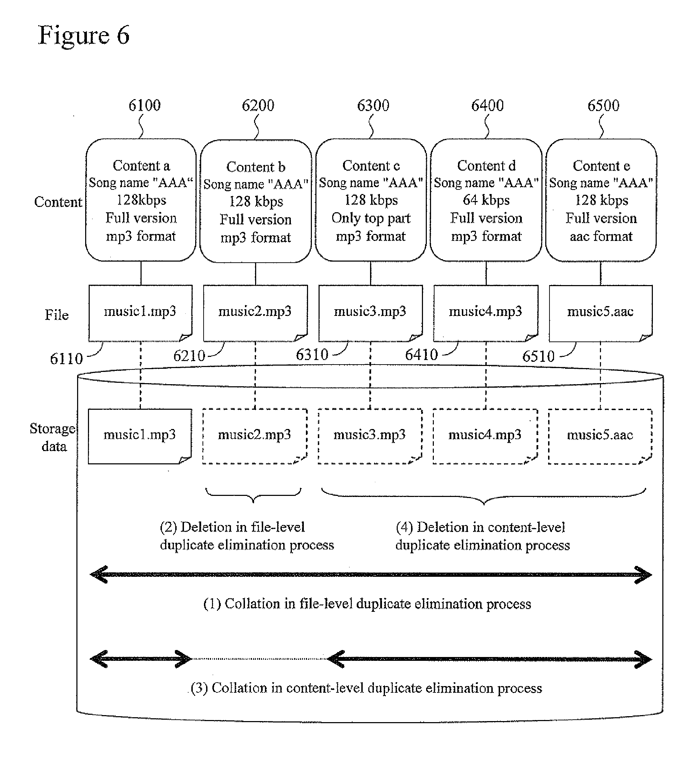

Figure 6 is an explanatory view illustrating an image of duplicate elimination when integrated duplicate elimination with a combination of duplicate elimination at the file level and duplicate elimination at the content level is applied. For example, five music contents 6100, 6200, 6300, 6400, and 6500 described below will be considered as samples. All five music contents are created based on the same music (song name "AAA"). In the music content 6100, the bit rate during reproduction is 128 Kbps. The music content 6100 is a full version in which the length of the content coincides with the original version of the content from the top to the bottom, and the format type is an mp3 format. The music content 6200 is the same as the music content 6100. Compared to the music content 6100, the bit rate and the format type of the music content 6300 are the same, but the music content 6300 is a version in which the length of the content coincides with the original version of the content from the top to the middle. An example of this is a case in which the music content 6300 is formed by content with one minute of reproduction time that is identical with the top one minute of the music content 6100 when the music content 6100 is formed by content with three minutes of reproduction time. Compared to the music content 6100, the length of the content and the format type of the music content 6400 are the same, but the bit rate, 64 Kbps, is different. Compared to the music content 6100, the bit rate and the length of the content of the music content 6500 are the same, but the format type, an aac format, is different. The music contents 6100, 6200, 6300, 6400, and 6500 are associated one-to-one with files 6110, 6120, 6130, 6140, and 6150 for storing digital data. The files 6110, 6120, 6130, 6140, and 6150 are stored in the actual storage.

A case of executing only a duplicate elimination process at the file level, a case of executing only a duplicate elimination process at the content level, and a case of a combination of the duplicate elimination process at the content level and the duplicate elimination process at the file level when the samples described above are used will be described.

First, the case of executing only the duplicate elimination process at the file level will be described. In this case, a file-level duplicate elimination process by the file server can detect duplication of the file 6110 corresponding to the music content 6100 and the file 6210 corresponding to the music content 6200 to delete one of the files. Although there can be a large number of systems for detecting duplication at the file level, it can be considered typical to detect duplication by comparing hash values generated from data of the target files based on a one-way function, such as SHA-1. The method utilizes a property of the one-way function in which the generated hash values are the same if inputted data are the same, and the generated hash values are not the same if the inputted data are different.

In this way, the duplication of a file with exactly the same data content can be detected in the duplicate elimination process at the file level, and the redundant file can be deleted. However, if the target files are multimedia data, such as music files and video files, files with different quality, such as format of target file and bit rate, are recognized as totally different files. It is difficult to detect the duplication and delete the redundant file.

Secondly, the case of executing only the duplicate elimination process at the content level will be described. In this case, waveform information of sound is analyzed from files corresponding to the music content based on a content-level duplicate elimination process in the content server, and information related to features of the sound is extracted. The information of the extracted features is collated to determine whether the target music contents are the same contents, and duplication is detected to select content to be deleted. Only information (metadata related to the content, such as bit rate, format, and reproduction time) necessary to restore the content to be deleted is stored, and then the data can be deleted. To restore the content to be deleted, a conversion process of the target content is executed based on the information stored before the deletion of the content to be deleted from the content in which the duplication is detected. The conversion process allows restoring the content deleted by the duplicate elimination at the content level. The duplicate elimination process at the content level can be applied to any type of content as long as the type of content allows extracting features that can be identified for collation. Examples of the content include music content from which features of sound can be extracted, image content from which features of image can be extracted, and video content if the resultant of the addition of information of sound to a plurality of layers of still images is considered as a video.

In this way, in the duplicate elimination process at the content level, the duplication can be detected for files with the same content at the content level even if the data contents of the files are different, and the redundant file can be deleted. In the duplicate elimination process at the content level, duplication can be similarly detected from the content of which duplication can be eliminated by the duplicate elimination process at the file level, and the redundant file can be deleted. Therefore, a higher duplicate elimination effect can be expected compared to the duplicate elimination process at the file level. However, the number of processing steps necessary for the extraction process of features used in the duplicate detection is large in the duplicate elimination process at the content level. Specifically, a large number of processing steps are necessary for a decoding process for converting data of target content to waveform information, an extraction process for extracting features from the waveform information, a collation process for collating the extracted information, and the like. Compared to the simple duplicate elimination process at the file level, the process of extracting the features from the waveform can be considered to correspond with the generation of hash values based on a one-way function, and the collation process for collating the extracted information can be considered to correspond with the collation process of the has values. However, there is no part in the duplicate elimination process at the file level equivalent to the decoding process for converting the data of the target content into waveform information. Therefore, it can be stated that the decoding part of the process contributes to the increase in the processing steps associated with the duplicate elimination process at the content level.

Thirdly, the case with a combination of the duplicate elimination process at the content level and the duplicate elimination process at the file level will be described. In this case, the process is executed in the following four steps as shown in Figure 6. First, a collation process based on the duplicate elimination process at the file level is executed. The collation process here is applied to all files from which duplication may be eliminated. In the example, it is determined that the files 6110 and 6210 duplicate at the file level. Secondly, a duplicate file is deleted based on the duplicate elimination process at the file level. In the example, the file 6210 is selected as a deletion target, and the file 6210 is deleted. Thirdly, a collation process based on the duplicate elimination process at the content level is executed. In the collation process here, the content corresponding to the file determined to be duplicated in the duplicate elimination process at the file level is not included. In the example, four contents 6100, 6300, 6400, and 6500 other than the content 6200 are the target. In the example, all contents are determined to be duplicated at the content level. Lastly and fourthly, files corresponding to the duplicate contents are deleted based on the duplicate elimination process at the content level. In the example, only the file 6110 corresponding to the content 6100 including high-quality data necessary to restore other contents is left, and the rest is selected as the deletion target. Before the deletion, information of the contents necessary to restore the contents to be deleted is stored. The foregoing processing steps realize the duplicate elimination process with a combination of the content level and the file level.

In this way, the duplicate elimination process with a combination of the two can attain a duplicate elimination effect equivalent to that in the case of the duplicate elimination process at the content level and can reduce the number of processing steps necessary to eliminate the duplication at the content level. Specifically, in the duplicate elimination process with a combination of the two, the collation for the content 6200 based on the duplicate elimination process at the content level can be skipped. As a result, the duplicate elimination process at the file level can be applied in advance to the content for which the duplicate detection at the file level and the deletion of the redundant file can be performed, and the duplicate detection at the content level and the deletion of the redundant content can be performed only for the remaining content.

Hereinafter, information that needs to be managed and specific processing to realize the integrated duplicate elimination process with a combination of the duplicate elimination process at the content level and the duplicate elimination process at the file level will be described.

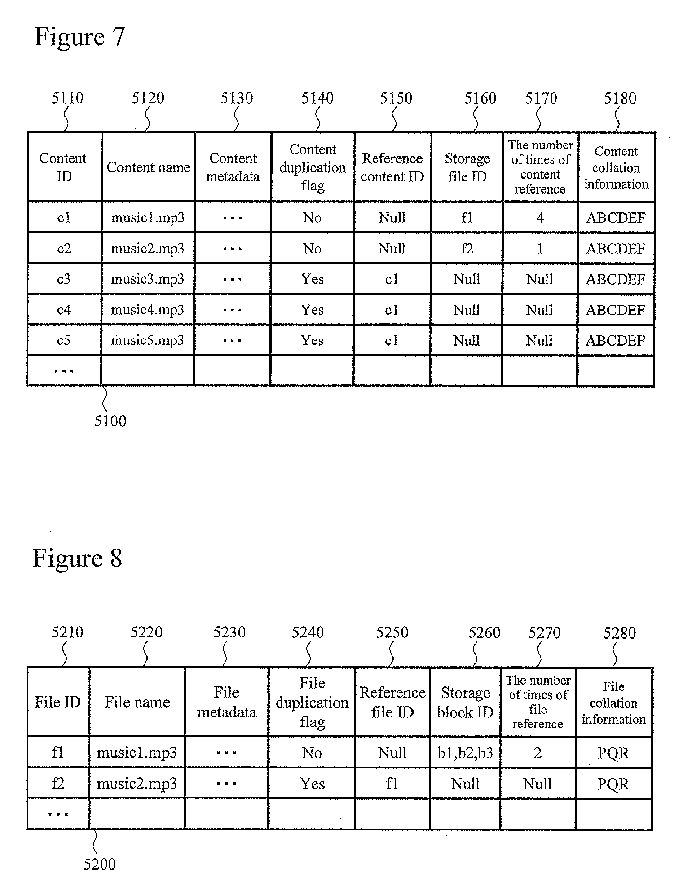

Figure 7 is a diagram illustrating a configuration of the content management table 5100 managed on the content server 1100. The content management table 5100 manages information related to content for which a storage request is received by the content server 1100 from the client machine. Specifically, the content management table 5100 has constituent elements including a content ID 5110, a content name 5120, content metadata 5130, a content duplication flag 5140, a reference content ID 5150, a storage file ID 5160, the number of times of content reference 5170, and content collation information 5180.

The content ID 5110 is a unique identifier provided by the system to content for which a storage request is issued to the content server. The content name 5120 is a name provided by the user to content to be stored at the storage of the content. The content metadata 5130 is information related to the content included in the content to be stored. An example of the information includes creation date/time of the content, an owner, an access control list, and the size of the content. The content duplication flag 5140 is a flag indicating whether the content is deleted after detection of the duplication of the content with other content in the duplicate elimination process at the content level. If the flag indicates Yes, the substance of the content is not stored, and other content is referenced. If the flag indicates No, the substance of the content is stored. The flag indicates a Null value if there is no determination based on the duplicate elimination process. The reference content ID 5150 is information for identifying the referenced content when the substance of the content is not stored based on the duplicate elimination process at the content level and other content is referenced. A Null value is stored in the entry if the duplicate verification based on the duplicate elimination process at the content level is not performed for the content. The storage file ID 5160 is an identifier used to identify the storage file corresponding to the content. The storage file ID 5160 is provided by the file server at the storage of the target file. Details will be described later. The number of times of content reference 5170 denotes the number of times the substance of the content is referenced. Specifically, the number denotes a sum of the number of times of reference by the content and the number of times referenced from the content determined to be duplicated at the content level in the duplicate elimination process at the content level. The content collation information 5180 is information related to features at the content level extracted from the content. The information is used for the duplicate detection process in the duplicate elimination process at the content level. Information related to features of sound is stored if the target content is music, and information related to features of an image is stored if the target content is an image.

Figure 8 is a diagram illustrating a configuration of the file management table 5200 managed on the file server 2100. The file management table 5200 manages information related to a file for which a storage request is received by the file server 2100 from the content server. Specifically, the file management table 5200 has constituent elements including a file ID 5210, a file name 5220, file metadata 5230, a file duplication flag 5240, a reference file ID 5250, a storage block ID 5260, the number of times of file reference 5270, and file collation information 5280.

The file ID 5210 is a unique identifier provided by the system to a file for which a storage request is issued to the file server. The file name 5220 is a name provided by the request source to the file to be stored at the storage of the file. The file metadata 5230 is information related to the file included in the file to be stored. An example of the information includes creation date/time, an owner, an access control list, and the size of file. The file duplication flag 5240 is a flag indicating whether the file is deleted after detection of the duplication of the file with another file based on the duplicate elimination process at the file level. If the flag indicates Yes, the substance of the file is not stored, and another file is referenced. If the flag indicated No, the substance of the file is stored. A Null value is stored in the entry if the duplicate verification based on the duplicate elimination process at the file level is not performed for the file. The reference file ID 5250 is information for identifying the referenced file when the substance of the file is not stored based on the duplicate elimination process at the file level and another file is referenced. If the duplication is not eliminated from the file in the duplicate elimination process at the file level, a Null value is stored in the entry. The storage block ID 5260 is an identifier used to identify a data block corresponding to the file. The data block is a variable-length or fixed-length data storage area. A plurality of data blocks may exist in one file. Therefore, a plurality of block IDs may be registered in the field of the storage block ID 5260. Each storage block ID 5260 is provided by a storage at the storage of the target data block. Details will be described later. The number of times of file reference 5270 denotes the number of times the substance of the file is referenced. Specifically, the number denotes a sum of the number of times of reference by the file and the number of times referenced from the file determined to be duplicated at the file level in the duplicate elimination process at the file level. The file collation information 5280 is information related to the hash values generated from the file using a one-way function. The information is used in the duplicate detection process of the duplicate elimination process at the file level.

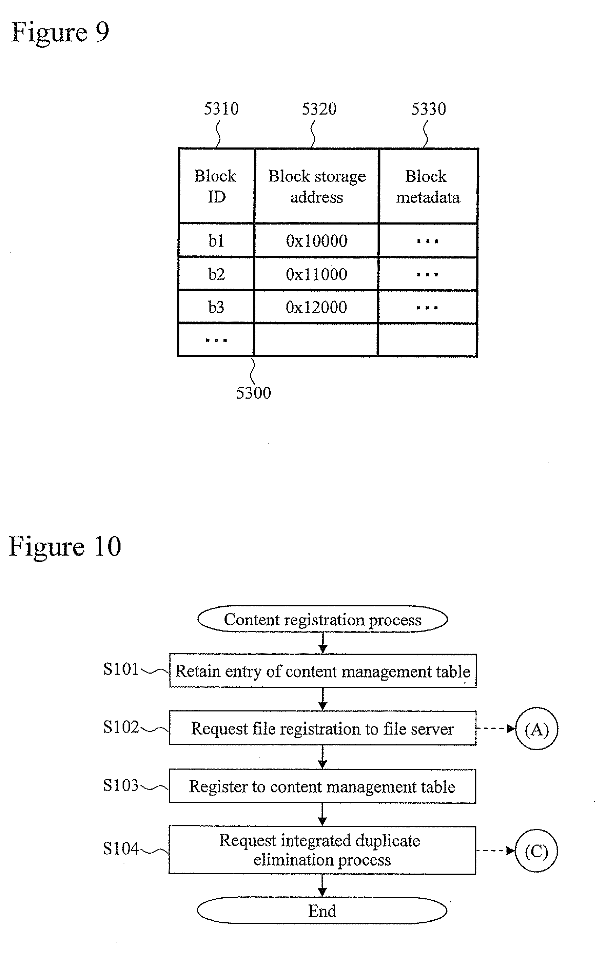

Figure 9 is a diagram illustrating a configuration of the data block management table 5300 managed on the storage 3100. The data block management table 5300 manages information related to the data block for which a storage request is received by the storage 3100 from the file server. Specifically, the data block management table 5300 has constituent elements including a block ID 5310, a block storage address 5320, and block metadata 5330,

The block ID 5310 is a unique identifier provided by the system to the data block for which the storage request is issued to the storage. The block storage address 5320 is an address for identifying a storage location on a recording medium at the storage of the data block. The block metadata 5330 is information related to the data block included in the data block to be stored. An example of the information includes creation date/time of the data block and last access date/time.

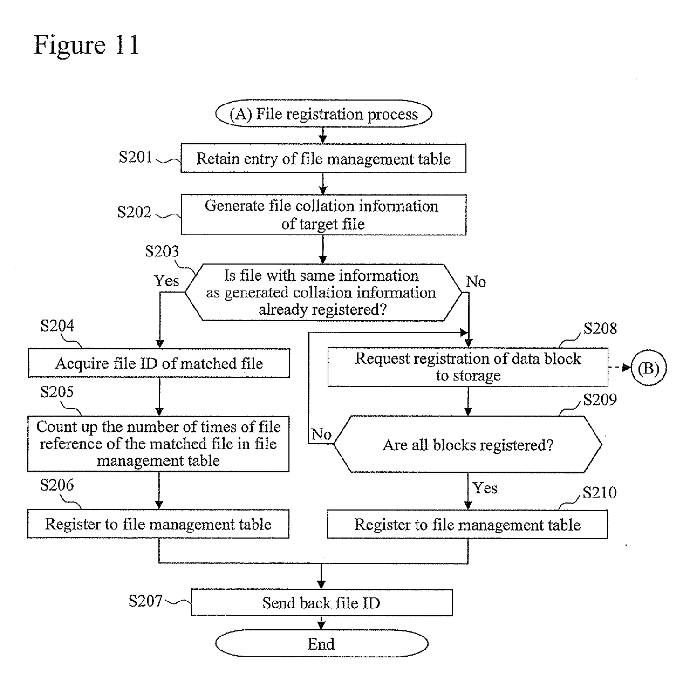

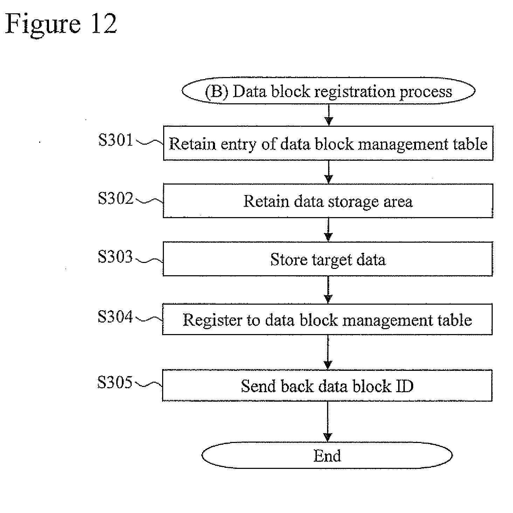

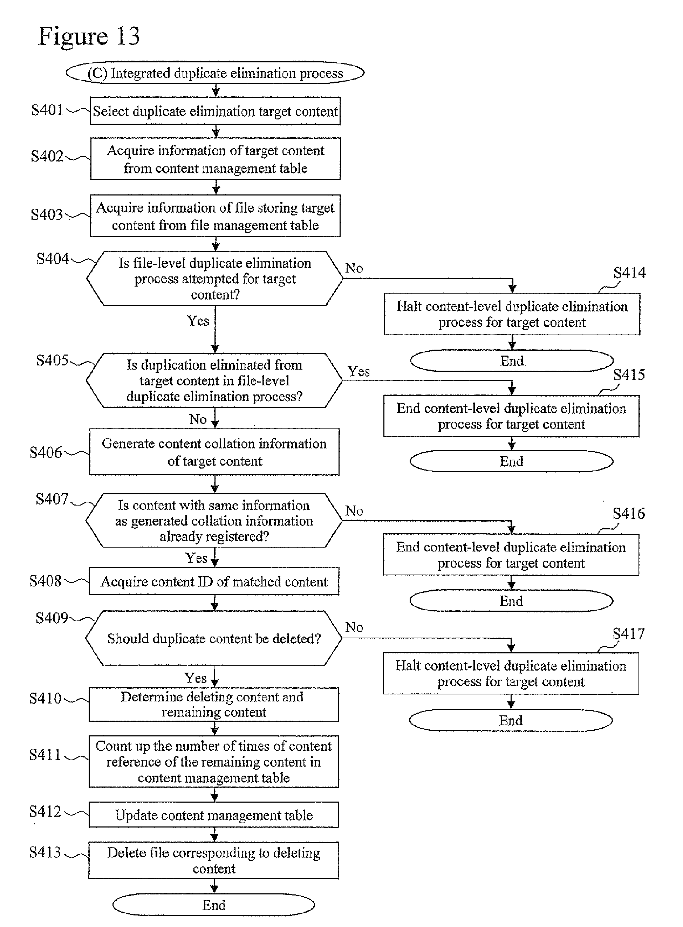

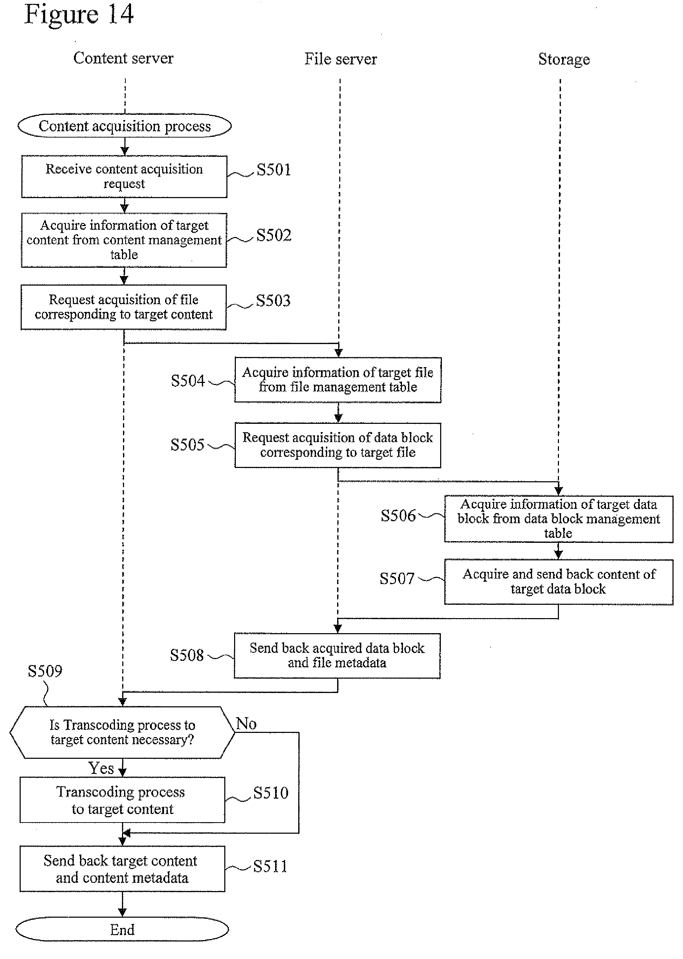

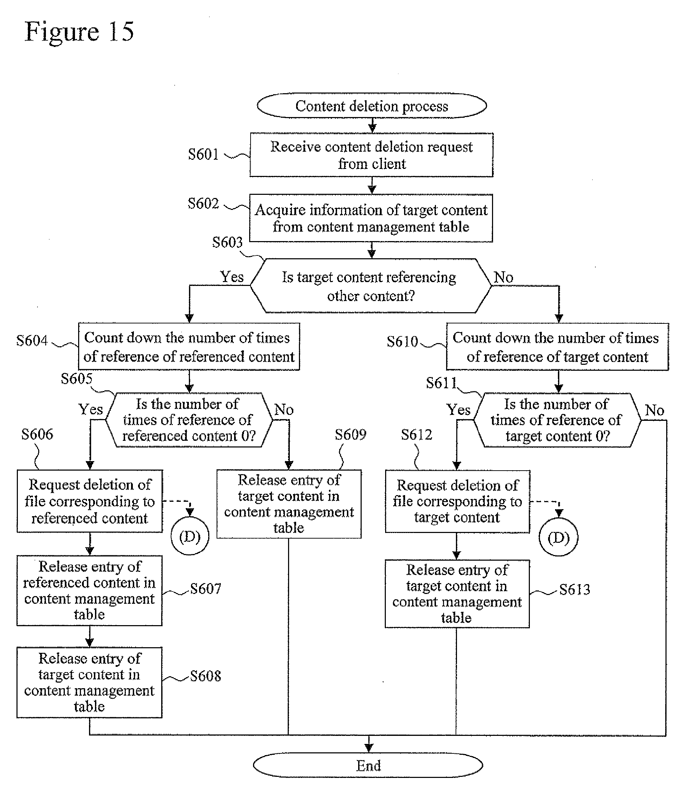

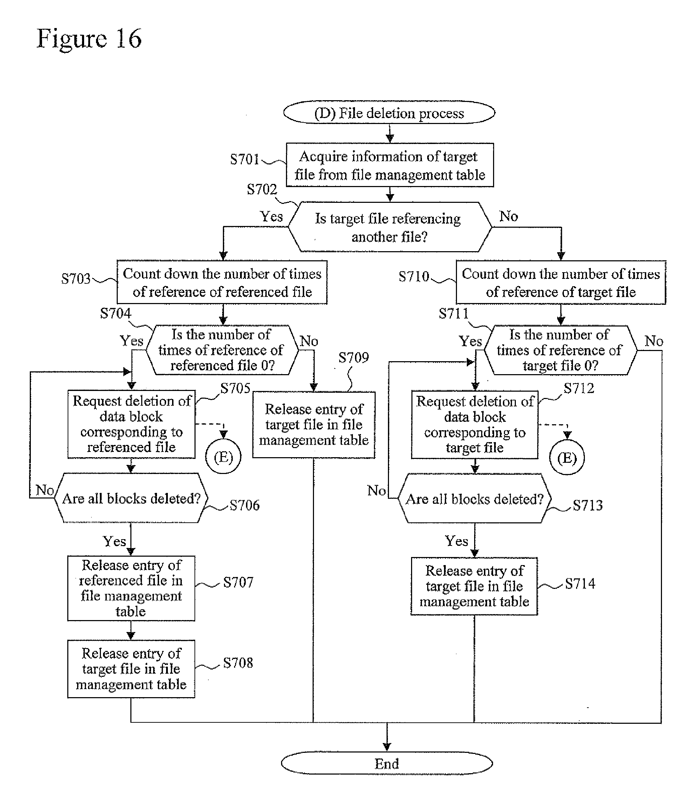

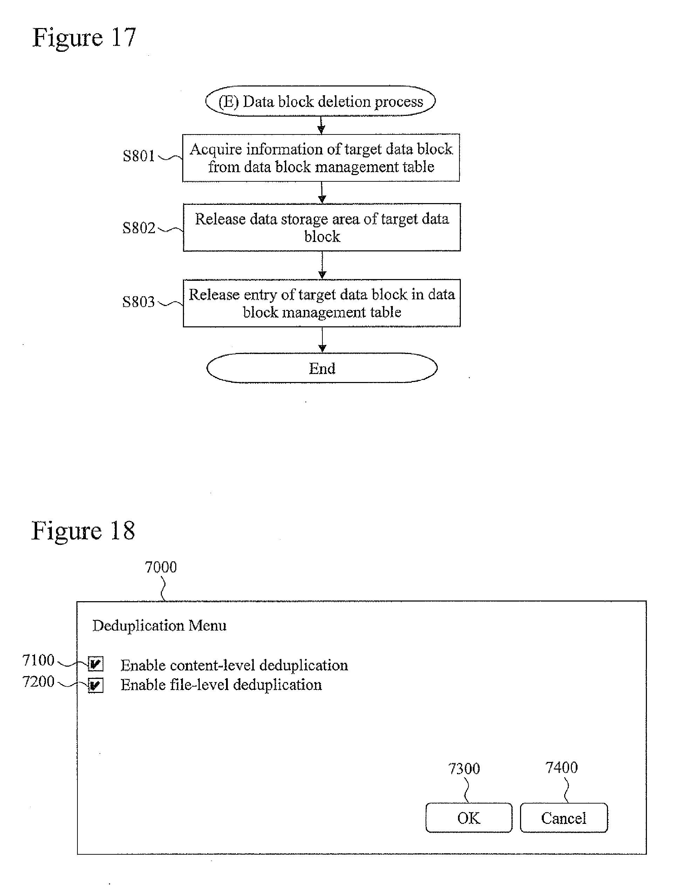

The configuration of the system provided by the present invention and the configuration of the management information have been described. Hereinafter, a processing system realized by the present invention will be described. Here, a content registration process (Figure 10), a file registration process (Figure 11), a data block storage process (Figure 12), an integrated duplicate elimination process (Figure 13), a content acquisition process (Figure 14), a content deletion process (Figure 15), a file deletion process (Figure 16), and a data block deletion process (Figure 17) will be described.

Figure 10 shows a flow of a series of processes in the content registration process in the content server 1100. First, in the content server 1100, an unused entry is searched from the content management table 5100, and the entry is retained (step S101). A registration request of the file corresponding to the content to be registered is issued to the file server 2100 (step S102). Details of the file registration process will be described later. Information of the content to be registered is registered in the entry of the content management table 5100 retained in processing step S101 (step S103). At this point, the content ID is provided to the content to be registered. Lastly, the content server 1100 requests the integrated duplicate elimination control program 1126 for the integrated duplicate elimination process targeting the content to be registered (processing step S104). Details of the integrated duplicate elimination process will be described later.

Figure 11 shows a flow of a series of processes in the file registration process in the file server 2100. First, an unused entry is searched from the file management table 5200 in the file server 2100, and the entry is retained (step S201). File collation information is generated from the content of the file to be registered (step S202). A hash value of the target file is generated here. Whether a file with the same information as the generated file collation information is already registered in the file management table 5200 is checked (step S203). If the file is registered, the file ID of the matched file is acquired from the file management table 5200 (step S204). A value of the number of times of file reference in the entry of the matched file in the file management table 5200 is added (step S205). Information of the file to be registered is registered in the entry of the file management table 5200 retained in processing step S201 (step S206). At this point, the file ID is provided to the file to be registered. Lastly, the file ID provided to the registered file is sent back to the request source (step S207).

If the file is not registered in processing step S203, a registration request of the data block corresponding to the file to be registered is issued to the storage 3100 (step S208). Details of the data block registration process will be described later. Processing step S208 is repeated until all data blocks corresponding to the file to be registered are registered (step S209). After the registration of all blocks, the information of the file to be registered is registered in the entry of the file management table 5200 retained in processing step S201 (step S210). At this point, the file ID is provided to the file to be registered as in processing step S206. Lastly, the file ID provided to the registered file is sent back to the request source (step S207).

Figure 12 shows a flow of a series of processes in the data block registration process in the storage 3100. First, an unused entry is searched from the data block management table 5300 in the storage 3100, and the entry is retained (step S301). A data storage area on the recording medium capable of storing one data block is retained in the storage 3100 (step S302). The data to be stored is stored in the data storage area retained in processing step S302 (step S303). Information of the data block to be registered is registered in the entry of the data block management table 5300 retained in processing step S301 (step S304). Lastly, the block ID provided to the registered data block is sent back to the request source (step S305).

Figure 13 shows a flow of a series of processes in the integrated duplicate elimination process in the content server 1100. First, a duplicate elimination target content is selected from the stored contents in the content server 1100 (step S401). Information of the target content selected in processing step S401 is acquired from the content management table 5100 (step S402). The file ID of the file corresponding to the target content is identified here. Information of the file identified based on the information acquired in processing step S402 is acquired from the file management table 5200 (step S403). In the process, the file management table access client program 1127 is used to issue a request to the file server 2100 and receive the result to acquire the information related to the file registered in the file management table 5200. Information, such as whether the duplication is eliminated at the file level from the file corresponding to the target content, can be acquired. Based on the information acquired in processing step S403, whether the file-level duplicate elimination process is attempted for the target content is determined (step S404). The following process is divided depending on whether the value of the file duplication flag 5240 of the file corresponding to the target content is Null or not. If the value is Null, it is determined that the duplicate elimination process at the file level is not attempted for the file, and the content-level duplicate elimination process for the target content is halted and terminated (step S414). The integrated duplicate elimination process is applied again to the pending content at another time. If the value is not Null, whether the duplication is eliminated from the target content in the file-level duplicate elimination process is determined (step S405). The following process is divided depending on whether the value of the file duplication flag 5240 of the file corresponding to the target content is Yes or No. If the value is Yes, it is determined that the duplication is already eliminated from the file at the file level and that the duplicate elimination at the content level is not necessary, and the process ends without carrying out the duplicate elimination process at the content level for the target content (step S415). If the value is No, the content server 1100 generates content collation information of the target content (step S406). Whether content with the same information as the generated content collation information is already registered in the content management table 5100 is checked (step S407). If the content is not registered, it is determined that there is no duplicate content at the content level, and the duplicate elimination process at the content level for the target content is terminated (step S416). If the content is registered, the content ID of the matched content is acquired from the content management table 5100 (step S408). Whether to delete the duplicate content is determined (step S409). The determination is based on the storage capacity reduction effect by the duplicate elimination at the content level, the amount of processing resources necessary for the duplicate elimination at the content level, and the load status of the content server 1100 that executes the duplicate elimination process, the related file server 2100, the storage 3100, various networks, and the like. For example, if there is still enough space in the storage capacity of the system while the load of various servers and networks are high, it can be determined to put off the duplicate elimination of the duplicate content. On the other hand, if there is no enough space in the storage capacity of the system while the load of various servers and networks is low, it can be determined to eliminate the duplication of the duplicate content. If it is determined in processing step S409 that the duplicate should not be deleted, the duplicate elimination process at the content level for the target content is halted and terminate (step S417). In this case, the value of the content duplication flag 5140 of the target content remains Null. If it is determined in processing step S409 that the duplication should be deleted, one of the two matched contents is determined as a deleting content, and the other is determined as a remaining content. The content capable of restoring the content deleted in the duplicate elimination after the duplicate elimination is selected to be left. More specifically, higher-quality content with more information is selected as the remaining content. The number of times of content reference of the remaining content in the content management table 5100 is counted up (step S411). Here, the number of times of content reference of the deleting content is added to the number of times of content reference of the remaining content. The content management table 5100 is updated (step S412). Specifically, the contents of the entry of the remaining content and the entry of the deleting content in the content management table 5100 are updated. The content duplication flag is updated to No in the entry of the remaining content. In the entry of the deleting content, the content duplication flag is updated to Yes, the reference content ID is updated to the content ID of the remaining content, and the storage file ID and the number of times of content reference are updated to Null. Lastly, the file corresponding to the content to be deleted is deleted (step S413). The file deletion process will be described later.

Figure 14 shows a flow of a series of processes in the content acquisition process from the client machine. First, the content server 1100 receives a content acquisition request from the client machine 4100 (step S501). The information of the target content, for which the acquisition is requested, is acquired from the content management table 5100 (step S502). The file corresponding to the content to be acquired can be identified here. Acquisition of the file corresponding to the target content is requested to the file server 2100. The file server 2100 acquires information of the target file, for which the acquisition is requested, from the file management table 5200 (step S504). The data block corresponding to the file to be acquired can be identified here. A request is issued to the data block acquisition storage 3100 corresponding to the target file. The acquisition of a plurality of data blocks may be requested at once, or the acquisitions may be sequentially requested. In the storage 3100, information of the target data block, for which the acquisition is requested, is acquired from the data block management table 5300 (step S506). The location where the data block to be acquired is actually stored can be identified here. The content of the target data block is acquired, and the result is sent back to the request source (step S507). The file server 2100 sends back the acquired data block and the metadata (information registered in the entry of the target file of the file management table 5200) of the target file, for which the acquisition is requested, to the request source (step S508). The content server 1100 determines whether a conversion process, i,e. Transcoding process, for the content to be acquired is necessary (step S509). If the duplication is eliminated at the content level from the content to be acquired, whether to execute a content conversion process for restoring the target content is determined. Specifically, the metadata of the content corresponding to the acquired file and the metadata of the content to be acquired are compared, and it is determined that the content conversion process is necessary if the contents are different. If it is determined in processing step S509 that the Transcoding process is necessary, the Transcoding process is applied to the target content (step S510). A content conversion process for restoring the state of being consistent with the metadata of the content to be acquired is applied to the file corresponding to the target content. For example, in the case of music content, conversion of the bit rate, format type conversion, change in the reproduction time, and the like are performed as necessary. Lastly, the content server 1100 sends back the content to be acquired and the metadata (information registered in the entry of the target content of the content management table 5100) of the content to the request source. If it is determined in processing step S509 that the Transcoding process is not necessary, processing step S510 is skipped, and the process of processing step S511 is executed.

Figure 15 shows a flow of a series of processes in the content deletion process in the content server 1100. First, the content server 1100 receives a content deletion request from the client machine 4100 (step S601). Information of the target content, for which the deletion is requested, is acquired from the content management table 5100 (step S602). Whether the content to be deleted references other content based on the duplicate elimination at the content level is checked (step S603). The information acquired in processing step S602 is used for the check. If it is determined in processing step S603 that other content is referenced, the number of times of content reference of the referenced content is counted down (step S604). Whether the value of the number of times of content reference of the referenced content is 0 is checked (step S605). If the value is 0, deletion of the file corresponding to the referenced content is requested to the file server 2100 (step S606). Details of the file deletion process will be described later. After the file deletion, the entry of the referenced content in the content management table 5100 is released (step S607). Lastly, the entry of the content to be deleted in the content management table 5100 is released (step S608) to end the process. If the value of the number of times of content reference of the referenced content is not 0 in processing step S605, the used file is not deleted, and the entry of the content to be deleted in the content management table 5100 is released (step S609) to end the process. If it is determined in processing step S603 that other content is not referenced, the number of times of content reference of the content to be deleted is counted down (step S610). Whether the value of the number of times of content reference of the content to be deleted is 0 is checked (step S611). If the value is 0, deletion of the file corresponding to the content to be deleted is requested to the file server 2100 (step S612). Details of the file deletion process will be described later. After the file deletion, the entry of the content to be deleted in the content management table 5100 is released (step S613) to end the process. If the value of the number of times of content reference of the content to be deleted is not 0 in processing step S611, the used file is not deleted, and the process ends.

Figure 16 shows a flow of a series of processes in the file deletion process in the file server 2100. First, the file server 2100 receives a file deletion request from the content server 1100 and acquires information of the target file, for which the deletion is requested, from the file management table 5200 (step S701). Whether the file to be deleted references another file based on the duplicate elimination at the file level is checked (step S702). The information acquired in processing step S701 is used for the check. If it is determined in processing step S702 that another file is referenced, the number of times of file reference of the referenced file is counted down (step S703). Whether the value of the number of times of file reference of the referenced file is 0 is checked (step S704). If the value is 0, deletion of the data block corresponding to the referenced file is requested to the storage 3100 (step S705). Details of the data block deletion process will be described later. Processing step S705 is repeated until all data blocks corresponding to the target file are deleted (step S706). After the data block deletion, the entry of the referenced file in the file management table 5200 is released (step S707). Lastly, the entry of the file to be deleted in the file management table 5200 is released (step S708) to end the process. If the value of the number of times of file reference of the referenced file is not 0 in processing step S704, the used data block is not deleted, and the entry of the file to be deleted in the file management table 5200 is released (step S709) to end the process. If it is determined in processing step S702 that another file is not referenced, the number of times of file reference of the file to be deleted is counted down (step S710). Whether the value of the number of times of file reference of the file to be deleted is 0 is checked (step S711). If the value is 0, deletion of the data block corresponding to the file to be deleted is requested to the storage 3100 (step 5712). Details of the data block deletion process will be described later. Processing step 5712 is repeated until all data blocks corresponding to the target file are deleted (step S713). After the data block deletion, the entry of the file to be deleted in the file management table 5200 is released (step S714) to end the process. If the value of the number of times of file reference of the file to be deleted is not 0 in processing step S711, the used data block is not deleted, and the process ends.

Figure 17 shows a flow of a series of processes of the data block deletion process in the storage 3100. First, the storage 3100 receives a data block deletion request from the file server 2100 and acquires information of the target data block, for which the deletion is requested, from the data block management table 5300 (step S801). The data storage area of the data block to be deleted is identified based on the acquired information, and the area is released (step S802). The entry of the data block to be deleted in the data block management table 5300 is released to end the process (step S803).

Figure 18 shows an image diagram of an integrated duplicate elimination management screen 7000 provided by the integrated duplicate elimination control program 1126 in the content server 1100. The integrated duplicate elimination management screen 7000 enables accessing by use of a Web browser or the like to allow setting enabling and disabling of the duplicate elimination process at the content level and to allow setting enabling and disabling of the duplicate elimination process at the file level. To enable the duplicate elimination at the content level, a check box 7100 for enabling the content-level duplicate elimination is checked, and an OK button 7300 is pressed. Similarly, to enable the duplicate elimination at the file level, a check box 7200 for enabling the file-level duplicate elimination is used. To disable the duplicate elimination, the check of the check box is released, and the OK button 7300 is pressed. To cancel the input, a cancel button 7400 is pressed. Based on the integrated duplicate elimination management screen 7000, the integrated duplicate elimination with a combination of the content level and the file level, the duplicate elimination at the content level, and the duplicate elimination at the file level can be set. If only one of the levels is enabled, the duplicate elimination process at the disabled level is skipped in the processing flow.

Although the first embodiment of the present invention has been described, it is obvious that the present invention is not limited to the first embodiment, and the present invention can be configured in various ways without departing from the scope of the present invention.

### [Second Embodiment]

The first embodiment handles a mode of executing the duplicate elimination process at the file level in the file server 2100 in synchronization with the file registration process. However, the file server 2100 may execute the duplicate elimination process at the file level not in synchronization with the file registration process. Hereinafter, a control system when the duplicate elimination process at the file level in the file server 2100 is executed not in synchronization with the file registration process will be described as a second embodiment.

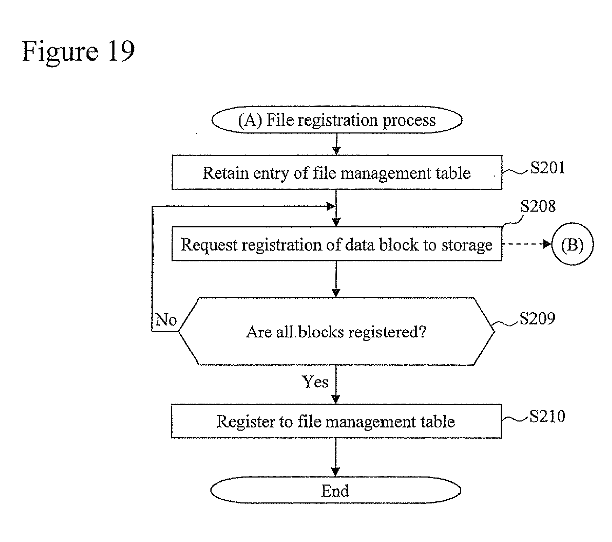

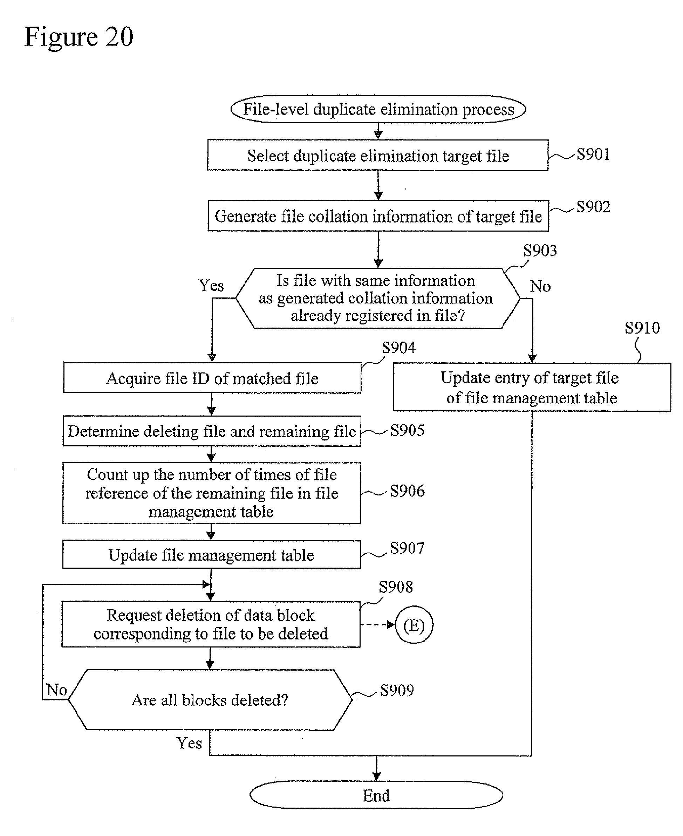

As described, part of the file registration process needs to be changed to asynchronously execute the duplicate elimination process at the file level. The change and the file-level duplicate elimination process executed not in synchronization with the file registration process will be described with reference to Figures 19 and 20.

Figure 19 shows a change in the file registration process in the file server 2100. Compared to the file registration process described in Figure 11, the present processing flow is a processing flow skipping the part of the duplicate elimination process at the file level. Specifics will be described below. First, in the file server 2100 that has received a file registration request, an unused entry is searched from the file management table 5200, and the entry is retained (step S201). A registration request of the data block corresponding to the file to be registered is issued to the storage 3100 (step S208). Processing step S208 is repeated until all data blocks corresponding to the file to be registered are registered (step S209). After the registration of all data blocks, the information of the file to be registered is registered in the entry of the file management table 5200 retained in processing step S201 (step S210). At this point, the file ID is provided to the file to be registered. Lastly, the file ID provided to the registered file is sent back to the request source (step S207). That is the file registration process.

Figure 20 shows a flow of a series of processes in the duplicate elimination process at the file level in the file server 2100. The process may be executed at an arbitrary opportunity in the file server 2100. For example, the process may be executed at certain intervals or may be executed upon a certain event. In the latter example, the process may be executed at the access request to the file management table 5200 from the file management table access client program 1127 on the content server 1100. In the process, a duplicate elimination target file is first selected from the stored files in the file server 2100 (step S901). File collation information is generated from the content of the target file (step S902). A hash value of the target file is generated here. Whether a file with the same information as the generated file collation information is already registered in the file management table 5200 is checked (step S903). If the file is registered, the file ID of the matched file is acquired from the file management table 5200 (step S904). One of the two matched files is determined as a deleting file, and the other is determined as a remaining file (step S905). Any one of the two may be deleted here. The number of times of file reference of the remaining file in the file management table 5200 is counted up (step S906). Here, the value of the number of times of file reference of the deleting file is added to the number of times of file reference of the remaining file here. The file management table 5200 is updated (step S907). Specifically, the contents of the entry of the remaining file and the entry of the deleting file in the file management table 5200 are updated. In the entry of the remaining file, the file duplication flag is updated to No. In the entry of the deleting file, the file duplication flag is updated to Yes, the reference file ID is updated to the file ID of the remaining file, and the storage block ID and the number of times of file reference are updated to Null. Lastly, deletion of the data block corresponding to the file to be deleted is requested to the storage 3100 (step S908). Processing step S908 is repeated until all data blocks corresponding to the target file are deleted (step S909), and the process ends. If a file with the same collation information is not registered in processing step S903, the entry of the target file in the file management table 5200 is updated (step S910), and the process ends. Specifically, the file duplication flag of the entry of the target file is updated to No.

The process allows asynchronous execution of the duplicate elimination process at the file level.

### [Third Embodiment]

The first embodiment handles a mode of executing the duplicate elimination process at the content level and the duplicate elimination process at the file level. However, the duplicate elimination process at the block level may also be executed in the storage 3100 to perform integrated duplicate elimination at the block level and the content level. Hereinafter, a control system of the integrated duplicate elimination when the duplicate elimination process at the block level is also executed will be described as a third embodiment.

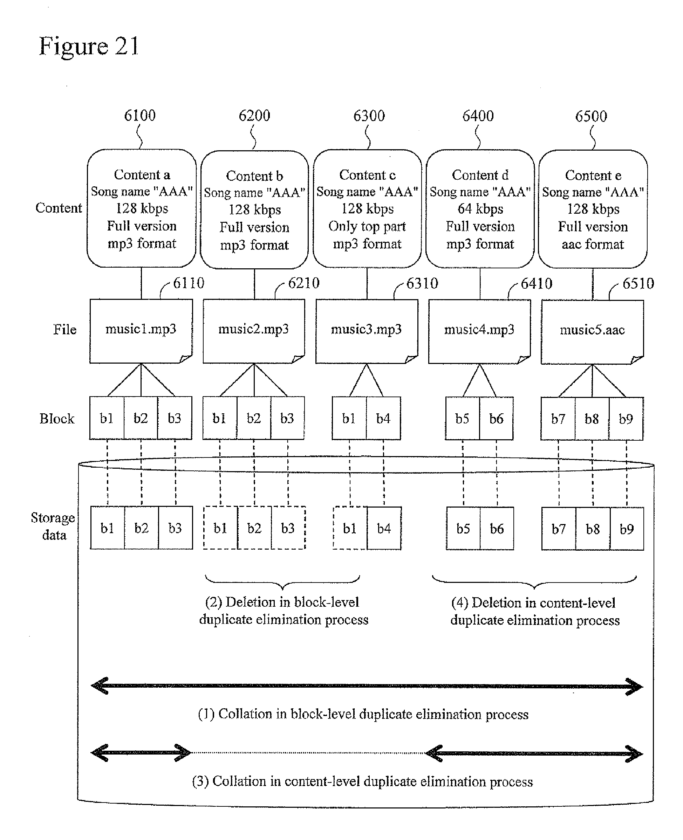

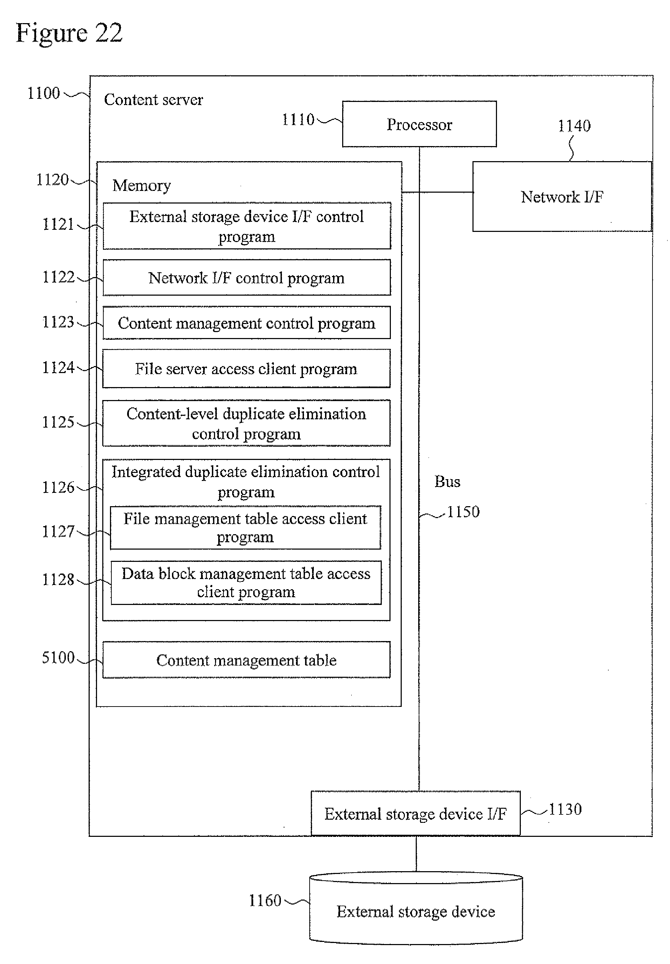

As described, to perform the integrated duplicate elimination when the duplicate elimination process at the block level is also executed, part of the configuration of the content server, the configuration of the storage, the data block management table, the data block registration process, the integrated duplicate elimination process, the data block deletion process, and the integrated duplicate elimination management screen needs to be changed. Hereinafter, an image of duplicate elimination with a combination of the duplicate elimination processes at the block level and the content level will be described with reference to Figure 21, and the changes will be described with reference to Figures 22, 23, 24, 25, 26, 27, and 28.

Figure 21 is an explanatory view illustrating an image of duplicate elimination when the integrated duplicate elimination with a combination of the duplicate elimination at the block level and the duplicate elimination at the content level is applied. The sample used as an example is the same as the sample described in Figure 6. In Figure 21, there are blocks b1, b2, and b3 as data blocks corresponding to the file 6110. There are blocks b1, b2, and b3 as data blocks corresponding to the file 6210 with the same content as the file 6110. There are a block b1 and a block b4 with new different data as data blocks corresponding to a file 6310 with the same content as part of the file 6110. The same applies for the rest. A file 6410 has blocks b5 and b6 as corresponding data blocks, and a file 6510 has blocks b7, b8, and b9 as corresponding data blocks. The number of data blocks per file depends on the size of the target file.

Like the duplicate elimination at the file level, the duplicate elimination at the block level is realized by generating hash values of the target data blocks, collating the values to detect duplication, and deleting redundant duplicate data blocks.

A case of a combination of the duplicate elimination process at the content level and the duplicate elimination process at the block level in place of the duplicate elimination process at the file level will be described. In this case, the process is executed in the following four steps as shown in Figure 21. First, a collation process based on the duplicate elimination process at the block level is executed. The collation process executed here is applied to all data blocks from which the duplication may be eliminated. In the example, it is determined that the blocks b1, b2, and b3 are duplicated at the block level. Secondly, duplicate data blocks are deleted based on the duplicate elimination process at the block level. In the example, the data blocks corresponding to the file 6110 are selected to be left, and the rest of the duplicate data blocks are deleted. Thirdly, a collation process based on the duplicate elimination process at the content level is executed. Contents with more than a certain number of data blocks determined to be duplicated in the duplicate elimination process at the block level are not included in the collation process executed here. In the example, contents in which more than 50% among all corresponding data blocks are deleted by the duplicate elimination at the block level are not included as the collation target of the duplicate elimination process at the content level. In this case, three contents 6100, 6400, and 6500 other than the contents 6200 and 6300 are the target. In the example, all contents are determined to be duplicated at the content level. Lastly and fourthly, the files and the data blocks corresponding to the duplicate contents are deleted in the duplicate elimination process at the content level. In the example, only the file 6110 corresponding to the content 6100 with high-quality data necessary to restore other contents and the blocks b1, b2, and b3 as data blocks corresponding to the file 6110 are left, and the rest is selected as the deletion target. Before the deletion, information necessary to restore the contents to be deleted is stored for each content. The processing step realizes the duplicate elimination process with a combination of the content level and the block level.

In this way, as in the first embodiment, the duplicate elimination process with a combination of the two can attain the duplicate elimination effect similar to that in the case of the duplicate elimination process at the content level, and the number of processing steps necessary to eliminate duplication at the content level can be reduced. Specifically, the collation in the duplicate elimination process at the content level for the contents 6200 and 6300 can be skipped in the duplicate elimination process with a combination of the two. As a result, the duplicate elimination process at the block level is applied in advance to content for which the duplication can be detected and the redundant data blocks can be deleted at the block level, and the duplicate detection and the deletion of the redundant content at the content level can be performed just for the remaining content. The use of the duplicate elimination process at the block level can also reduce the number of processing steps necessary to execute the duplicate elimination process at the content level in a case, in which the duplication cannot be eliminated in the duplicate elimination process at the file level, and data is partially duplicated.

Figure 22 shows a change in the configuration of the content server 1100 shown in Figure 2. Compared to Figure 2, a data block management table access client program 1128 is newly added to the integrated duplicate elimination control program 1126 in Figure 22. The data block management table access client program 1128 executes a process of checking whether the duplicate elimination process at the block level is applied in the storage to the data block corresponding to the target content before the execution of the duplicate elimination at the content level in the content server 1100. To identify the data block corresponding to the target content, the file management table access client program 1127 is once used to access the file management table 5200 of the file server to identify the file corresponding to the target content. The data block management table access client program 1128 is then used to access the data block management table 5300 of the storage to identify the data block corresponding to the target file.

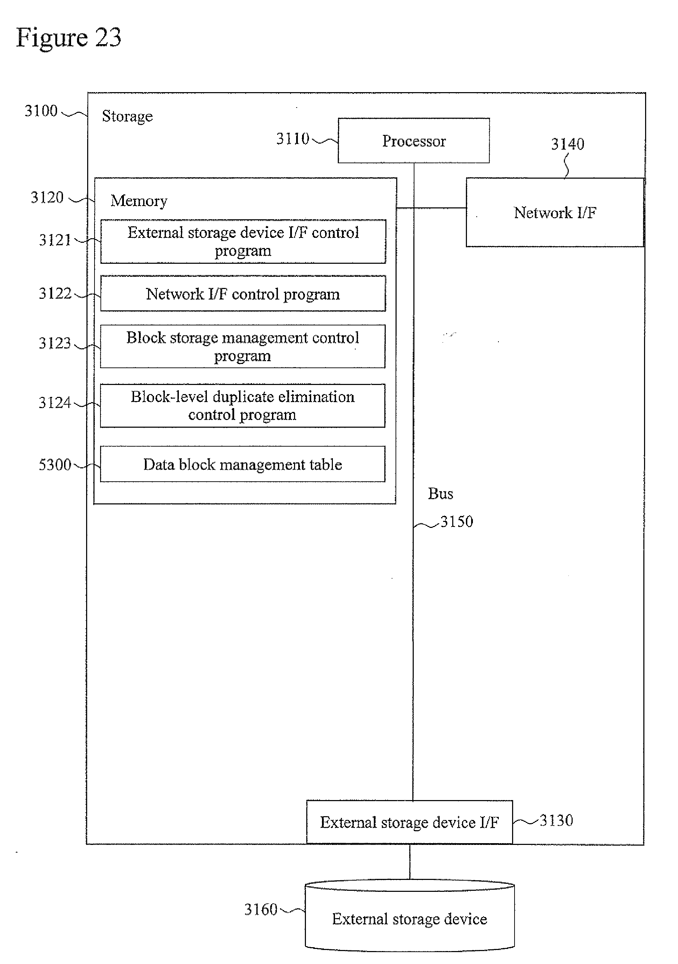

Figure 23 shows a change in the configuration of the storage 3100 shown in Figure 4. Compared to Figure 4, a block-level duplicate elimination control program 3124 is newly added to the memory 3120 in Figure 23. The block-level duplicate elimination control program 3124 is a program for providing a duplicate elimination function at the block level.

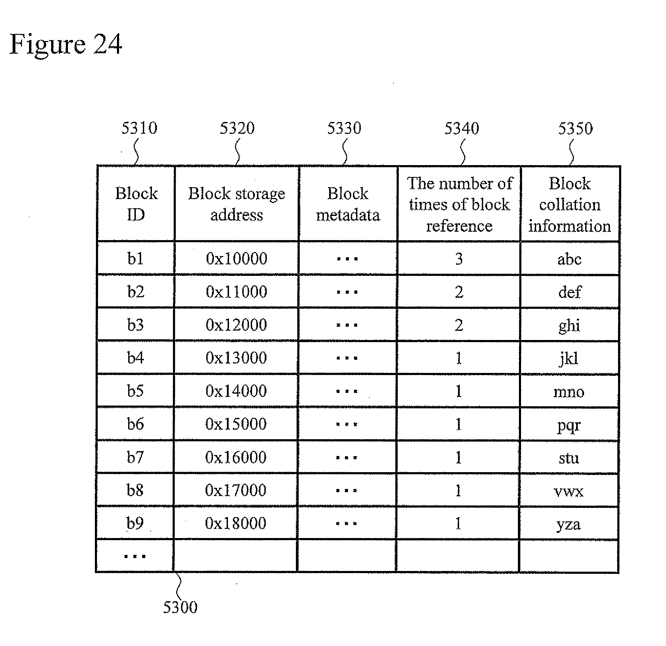

Figure 24 shows a change in the configuration of the data block management table 5300 shown in Figure 9. Compared to Figure 9, two attributes, the number of times of block reference 5340 and block collation information 5350, are newly added in Figure 24. The number of times of block reference 5340 denotes the number of times the substance of the data block is referenced. The block collation information 5350 denotes information related to a hash value generated using a one-way function based on the data block. The information is used for the duplicate detection process in the duplicate elimination process at the block level.

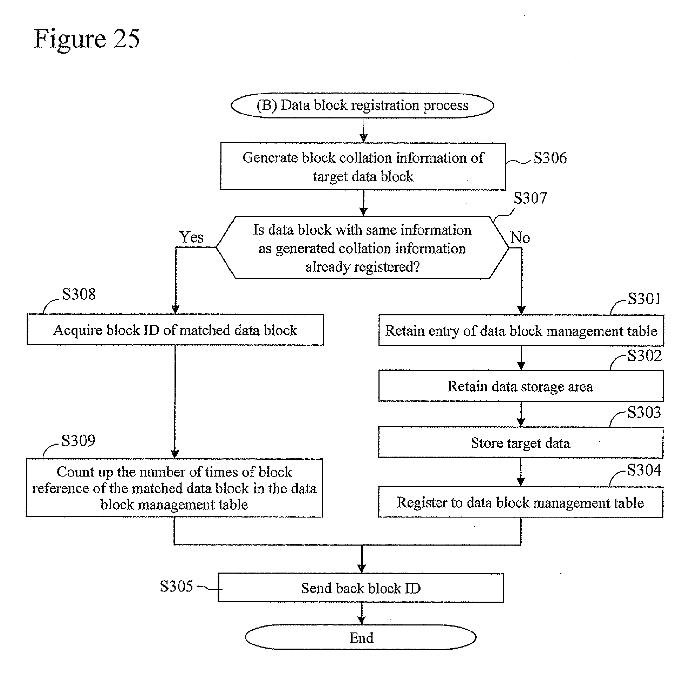

Figure 25 shows a change in the data block registration process in the storage 3100 shown in Figure 12. Compared to Figure 12, processing steps S306, S307, S308, and S309 are newly added in Figure 25. Hereinafter, the processing flow will be sequentially described.

First, in the storage 3100, block collation information is generated from the content of the target data block after the reception of a data block registration request (step S306). A hash value of the data stored in the target data block is generated here. Whether a data block with the same information as the generated block collation information is already registered in the data block management table 5300 is checked (step S307). If the data block is registered, the block ID of the matched data block is acquired from the data block management table 5300 (step S308). The number of times of block reference is added in the entry of the matched data block in the data block management table 5300 (step S309). Lastly, the block ID provided to the matched data block is sent back to the request source (step S305). If the data block with the same block collation information is not registered in processing step S307, the processes of processing steps S301, S302, S303, S304, and S305 described in Figure 12 are executed to register the target data block. As a result of the process, the duplicate elimination process at the block level can be synchronously executed in the block registration process.

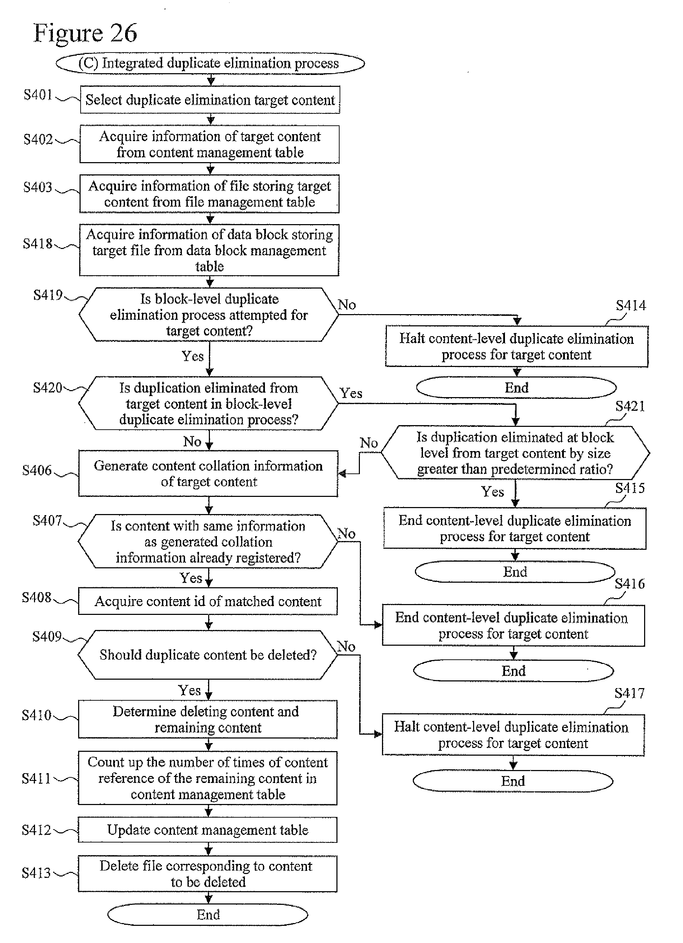

Figure 26 shows a change in the integrated duplicate elimination process in the content server 1100 shown in Figure 13. Compared to Figure 13, processing steps S418 and S421 are newly added in Figure 26, and part of the existing flow is updated as processing steps S419 and S420. Hereinafter, the changed part will be mainly described.

After the processing step S403, the content server 1100 adds a process (step S418) of requesting the storage 3100 for acquiring information of a data block storing a duplicate elimination process target file from the data block management table 5300. The data block management table access client program 1128 is used to request the acquisition. Information indicating whether the duplication is eliminated at the block level from the data block corresponding to the target content can be acquired. After acquiring the information, the content server 1100 determines whether the duplicate elimination process is attempted for the target content at the block level based on the information acquired in processing step S418 (step S419). The following process is divided depending on whether the value of the number of times of block reference 5340 of the data block corresponding to the target content is Null or not. If the value is Null, it is determined that the duplicate elimination process is not attempted for the data block at the block level, and the content-level duplicate elimination process for the target content is halted and terminated (step S414). However, such a situation does not occur in the case of asynchronous execution of the duplicate elimination process at the block level upon the block registration. If the value is not Null in processing step S419, whether the duplication is eliminated from the target content in the block-level duplicate elimination process is determined (step S420). The following process is divided depending on whether the value of the number of times of block reference 5340 of the data block corresponding to the target content is two or more. If it is determined that the value is two or more, i.e. the duplication is eliminated, it is determined that the duplicate elimination at the block level is already performed for the data block, and whether the duplication is eliminated at the block level from the target content by the size greater than a predetermined ratio is checked (step S421). A content-level duplicate elimination execution threshold 7600 set in the integrated duplicate elimination management screen 7000 described later is used for the value of the ratio used here. Specifically, when a value of 50% is designated as the content-level duplicate elimination execution threshold 7600 and when the size of the content is 10 MB while the data block length is 1 MB, the content includes 10 data blocks. In this state, if the duplication of five or more data blocks corresponding to the content is eliminated at the block level, the determination of processing step S421 is Yes. If it is determined Yes in processing step S421, the process proceeds to processing step S415 and ends. If it is determined No in processing step S421, the process proceeds to processing step S406, and the same process as in Figure 13 is executed. The determination of No denotes that the content has further become a target of the execution of the duplicate elimination process at the content level, because the duplicate elimination effect at the block level is not sufficient. If it is determined in processing step S420 that the value of the number of times of block reference 5340 is not two or more, i.e. the duplication is not eliminated, the process proceeds to processing step S406, and the same process as in Figure 13 is executed.

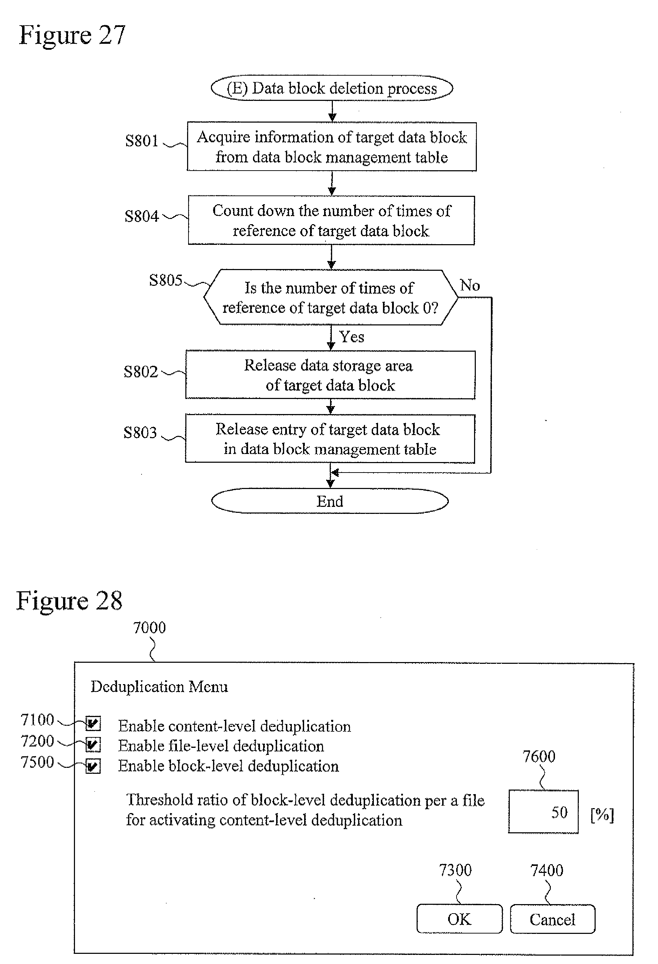

Figure 27 shows a change in the data block deletion process in the storage 3100 shown in Figure 17. Compared to Figure 17, processing steps S804 and S805 are newly added in Figure 27. Hereinafter, the changed part will be mainly described.

After processing step S801, the storage 3100 counts down the value of the number of times of block reference 5340 in the entry of the data block to be deleted in the data block management table 5300 (step S804). Whether the value of the number of times of block reference 5340 of the data block to be deleted is 0 is checked (step S805). If the value is 0, the process proceeds to processing step S802, and the same process as in Figure 17 is executed. If the value is not 0, the process ends.

Figure 28 shows a change in the integrated duplicate elimination management screen 7000 in the content server 1100 shown in Figure 18. Compared to Figure 18, the following two are newly added in Figure 28.

First, there is a check box 7500 for enabling block-level duplicate elimination. This is used to set enabling and disabling of the duplicate elimination process at the block level. The method of setting is the same as in the other two check boxes. Secondly, there is the content-level duplicate elimination execution threshold 7600. This is a threshold for determining whether to attempt the duplicate elimination process at the content level when the integrated duplicate elimination is performed with a combination of both the duplicate elimination process at the block level and the duplicate elimination process at the content level. If the duplication is eliminated at the block level from an arbitrary content at a ratio greater than the content-level duplicate elimination execution threshold 7600 among all data blocks corresponding to the content, the duplicate elimination process at the content level for the content is skipped. To set the value, a value is inputted in the field of the integrated duplicate elimination management screen 7000, and the OK button 7300 is pressed to enable the value. The integrated duplicate elimination management screen 7000 allows setting the integrated duplicate elimination with a combination of the content level and the block level as well as the integrated duplicate elimination with a combination of the content level, the file level, and the block level.

### [Fourth Embodiment]

The third embodiment handles a mode of executing the duplicate elimination process at the block level in the storage 3100 in synchronization with the data block registration process. However, the storage 3100 may execute the duplicate elimination process at the block level not in synchronization with the data block registration process. Hereinafter, a control system when the duplicate elimination process at the block level in the storage 3100 is executed not in synchronization with the data block registration process will be described as a fourth embodiment.

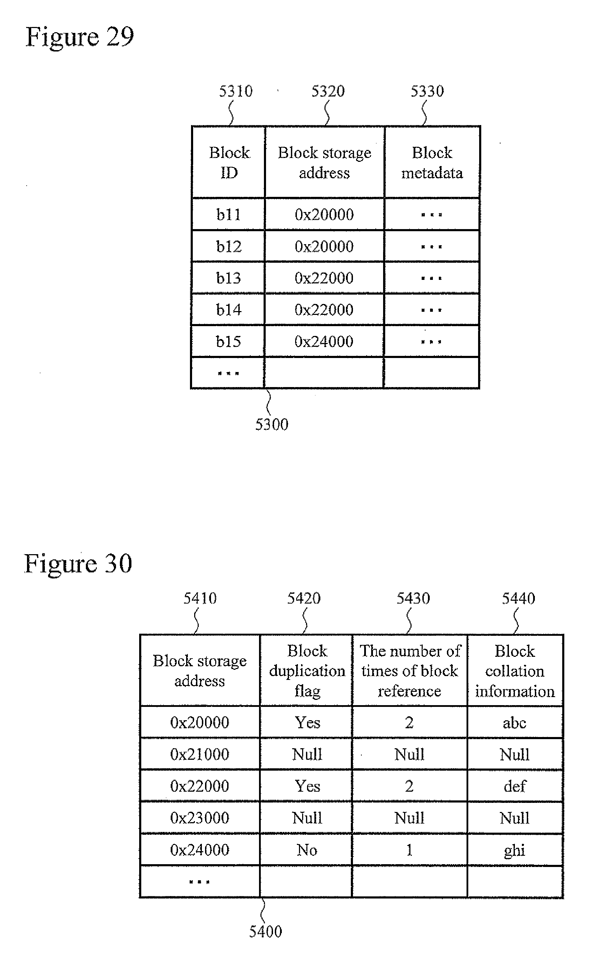

As described, to execute the duplicate elimination process at the block level asynchronously, part of the configuration of the data block management table, the data block registration process, and the integrated duplicate elimination process needs to be changed. The change and the block-level duplicate elimination process executed not in synchronization with the data block registration process will be described with reference to Figures 29, 30, and 31.

First, the change in the configuration of the data block management table 5300 will be described. In addition to the data block management table 5300, a data block storage address management table 5400 is newly created here.

Figure 29 is a diagram illustrating a configuration of the data block management table 5300. The configuration is the same as the configuration shown in Figure 9. However, a value duplicated with a value included in another entry can be registered in the address value registered in the field of the block storage address 5320.

Figure 30 is a diagram illustrating a configuration of the data block storage address management table 5400. Constituent elements include a block storage address 5410, a block duplication flag 5420, the number of times of block reference 5430, and block collation information 5440. The block storage address 5320 is an address for identifying the storage location on the recording medium at the storage of the data block. The block duplication flag 5420 is a flag showing whether duplication with another data block is detected in the data block stored in the block storage address area indicated by the block storage address in the duplicate elimination process at the block level, and the block storage address area is shared by another block. If the flag indicates Yes, the block storage address area is referenced by another block. If the flag indicates No, the block storage address area is not referenced by another block. A Null value is stored in the present entry if the duplication of the block storage address area is not verified by the duplicate elimination process at the block level, or if data is not stored in the block storage address area.

The number of times of block reference 5430 is the number of times the block storage address area is referenced. Specifically, the number indicates a sum of the number of times of reference by the data block and the number of times of reference from another data block determined to be duplicated at the block level in the duplicate elimination process at the block level. The block collation information 5440 is information related to a hash value generated from the data stored in the block storage address area using a one-way function. The information is used in the duplicate detection process of the duplicate elimination process at the block level.

If there is an information acquisition request from the content server 1100 through the data block management table access client program 1128, not only the content of the conventional data block management table 5300, but also the content of the data block storage address management table 5400 is provided together.

The change in the data block registration process will be described. In the case of the embodiment, the data block registration process is executed without changing the processing flow shown in Figure 12. However, in processing step S304, registration to the data block storage address management table 5400 is also performed when registration to the data block management table 5300 is performed.

The block-level duplicate elimination process will be described.

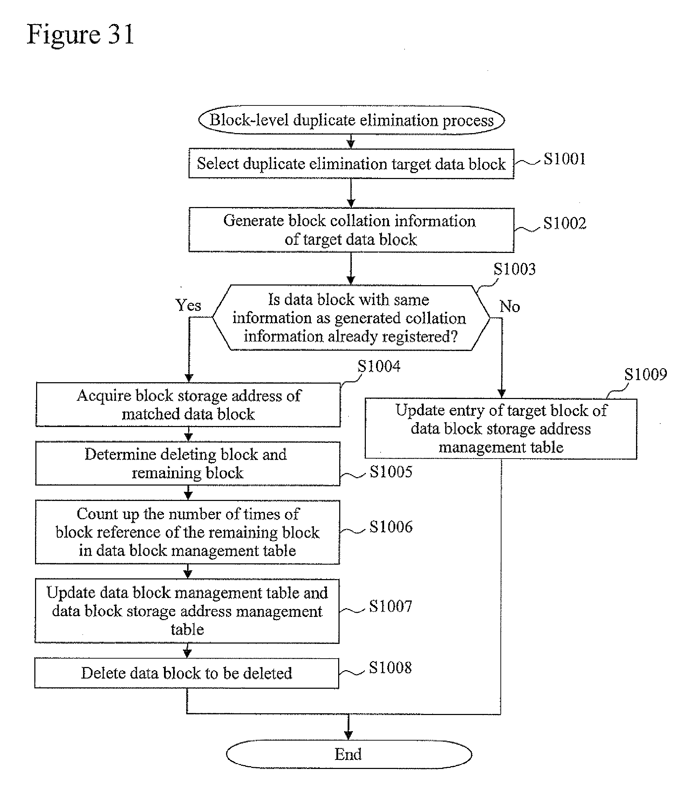

Figure 31 shows a flow of a series of processes in the duplicate elimination process at the block level in the storage 3100. The process may be executed at an arbitrary opportunity in the storage 3100. For example, the process may be executed at certain intervals or may be executed upon a certain event. In the latter example, the process may be executed at the access request to the data block management table 5300 from the data block management table access client program 1128 on the content server 1100. In the process, a duplicate elimination target data block is first selected from the stored data blocks in the storage 3100 (step S 1001). Block collation information is generated based on the content of the target data block (step S 1002). A hash value of the data stored in the block storage address area of the target data block is generated here. Whether a data block with the same information as the generated block collation information is already registered in the data block storage address management table 5400 is checked (step S1003). If the data block is registered, the block storage address of the matched data block is acquired from the data block storage address management table 5400 (step S1004). One of the matched two data blocks is determined as a deleting block, and the other is determined as a remaining block (step S1005). Any one of the two can be deleted here. The number of times of block reference of the entry equivalent to the remaining block in the data block storage address management table 5400 is counted up (step S1006). The value of the number of times of block reference of the deleting block is added to the number of times of block reference of the remaining block. The data block management table 5300 and the data block storage address management table 5400 are updated (step S1007). Specifically, the contents of the entries of the remaining blocks and the entries of the deleting blocks in two management tables are updated. The block storage address is updated to that of the remaining block in the entry of the deleting block in the data block management table 5300. The block duplication flag is updated to Yes in the entry of the remaining block in the data block storage address management table 5400. The block duplication flag is updated to Null in the entry of the deleting block, and the number of times of block reference and the block collation information are updated to Null. Lastly, the data registered in the data block storage address area corresponding to the data block to be deleted is deleted, and the area is released (step S1008). If the data block with the same collation information is not registered in processing step S 1 003, the entry of the target data block in the data block storage address management table 5400 is updated (step S1009) to end the process. Specifically, the block duplication flag of the entry of the target data block is updated to No.

Lastly, a change in the integrated duplicate elimination process will be described. The content of the integrated duplicate elimination process in the content server 1100 in the present embodiment is almost the same as the processing flow described in Figure 26. However, three points described next are different, and the points will now be described.

First, when the content server 1100 uses the data block management table access client program 1128 to access the data block management table 5300 of the storage 3100 to acquire information in processing step S418, the content server 1100 can use the same function to also access the data block storage address management table 5400 of the storage 3100 to acquire necessary information.

Secondly, to determine whether the duplicate elimination process at the block level is attempted for the target content in processing step S419, the value of the block duplication flag 5420 stored in the data block storage address management table 5400 is used here. It is determined that the duplicate elimination process at the block level is not attempted for the data block if the value is Null, and it is determined that the process is attempted if the value is not Null.

Thirdly, to determine whether the duplication is eliminated at the block level from the target content in processing step S420, the value of the block duplication flag 5420 stored in the data block storage address management table 5400 is used here. It is determined that the duplication is eliminated from the data block based on the duplicate elimination process at the block level if the value is Yes, and it is determined that the duplication is not eliminated if the value is No.

The process allows asynchronous execution of the duplicate elimination process at the block level.

### [Fifth Embodiment]

The embodiments described above handle modes of a combination of the duplicate elimination process at the content level and the duplicate elimination process at the file level as well as a combination of the duplicate elimination process at the content level and the duplicate elimination process at the block level. However, a mode of a combination of the duplicate elimination processes at three levels may also be handled. When the processes are combined, the execution opportunities of the duplicate elimination processes at the levels may also be realized by an arbitrary combination. For example, all duplicate elimination processes at three levels may be executed in synchronization with the content registration process. One or two of the three levels may be executed in synchronization with the content registration process, and the rest may be executed asynchronously. All three levels may be executed not in synchronization with the content registration process. The processing flow for realizing the combinations may be realized by an arbitrary combination of the processing flows described above.

### Industrial Applicability

According to the present invention, duplicate elimination of stored data in a storage system for storing data in a digital format and a computing system can reduce the storage use capacity required for the storage. As a result of the reduction in the storage use capacity, realization of the storage of a larger amount of data when the same storage use capacity is used and realization of the reduction in the data storage cost can be expected.

## Claims

1. An integrated duplicate elimination system comprising:
a first duplicate elimination unit that applies a duplicate elimination process to data of a data storage device, wherein both a duplicate elimination effect and a processing load are low; and
a second duplicate elimination unit that executes a duplicate elimination process after the duplicate elimination process by the first duplicate elimination unit, wherein both the duplicate elimination effect and the processing load are high, the second duplicate elimination unit acquiring a processing result of the first duplicate elimination unit prior to the duplicate elimination process applied to the data of the data storage device and applying the duplicate elimination process to at least data other than the data of which the duplication is already eliminated from the data storage device.

2. The integrated duplicate elimination system according to claim 1, wherein
the second duplicate elimination unit executes a duplicate elimination process at a content level for detecting duplication of the data content in the data storage device.

3. The integrated duplicate elimination system according to claim 1 or 2, wherein
upon storage of the data in the data storage device, the first duplicate elimination unit executes a duplicate elimination process at a file level for detecting duplication of the content storage-by-storage, the storages logically corresponding one to one with the data to be stored.

4. The integrated duplicate elimination system according to claim 1 or 2, wherein
upon storage of the data in the data storage device, the first duplicate elimination unit executes a duplicate elimination process at a block level for detecting duplication of the content piece-by-piece, the pieces formed by fixed-length or variable-length divisions of the data to be stored.

5. The integrated duplicate elimination system according to claim 1 or 2, wherein
the duplicate elimination process by the first duplicate elimination unit and the duplicate elimination process by the second duplicate elimination unit are synchronously executed upon storage of the data.

6. The integrated duplicate elimination system according to claim 1 or 2, wherein
the duplicate elimination process by the first duplicate elimination unit and the duplicate elimination process by the second duplicate elimination unit are executed not in synchronization with the storage process of the data.

7. A data storage device comprising:
a first duplicate elimination unit that applies a duplicate elimination process to stored data, wherein both a duplicate elimination effect and a processing load are low; and
a second duplicate elimination unit that executes a duplicate elimination process after the duplicate elimination process by the first duplicate elimination unit, wherein both the duplicate elimination effect and the processing load are high, the second duplicate elimination unit acquiring a processing result of the first duplicate elimination unit prior to the duplicate elimination process applied to the stored data and applying the duplicate elimination process to at least data other than the data of which the duplication is already eliminated from the data storage device.

8. A server device comprising:
a first duplicate elimination unit that applies a duplicate elimination process to data of a data storage device, wherein both a duplicate elimination effect and a processing load are low; and
a second duplicate elimination unit that executes a duplicate elimination process after the duplicate elimination process by the first duplicate elimination unit, wherein both the duplicate elimination effect and the processing load are high, the second duplicate elimination unit acquiring a processing result of the first duplicate elimination unit prior to the duplicate elimination process applied to the data of the data storage device and applying the duplicate elimination process to at least data other than the data of which the duplication is already eliminated from the data storage device.

9. A server device comprising:
an interface that acquires a result of a duplicate elimination process by a first duplicate elimination unit from an information providing unit through communication with a data storage device, the data storage device comprising: the first duplicate elimination unit that applies the duplicate elimination process to stored data, wherein both a duplicate elimination effect and a processing load are low; and the information providing unit that provides the result of the duplicate elimination process by the first duplicate elimination unit; and
a second duplicate elimination unit that executes a duplicate elimination process after the duplicate elimination process by the first duplicate elimination unit, wherein both the duplicate elimination effect and the processing load are high, the second duplicate elimination unit acquiring the processing result of the first duplicate elimination unit through the interface and applying the duplicate elimination process to at least data other than the data of which the duplication is already eliminated from the data storage device.
